(19) Europäisches Patentamt
European Patent Office
Office européen des brevets

(11) **EP 2 353 029 B1**

(12) **EUROPÄISCHE PATENTSCHRIFT**

(45) Veröffentlichungstag und Bekanntmachung des Hinweises auf die Patenterteilung:
**06.03.2019   Patentblatt 2019/10**

(21) Anmeldenummer: **09774832.1**

(22) Anmeldetag: **27.11.2009**

(51) Int Cl.:
*G01S 13/76* *(2006.01)*     *G01S 13/78* *(2006.01)*
*G01S 13/74* *(2006.01)*     *G01S 13/42* *(2006.01)*
*G01S 13/02* *(2006.01)*     *G01S 13/72* *(2006.01)*

(86) Internationale Anmeldenummer:
**PCT/EP2009/008552**

(87) Internationale Veröffentlichungsnummer:
**WO 2010/060651 (03.06.2010 Gazette 2010/22)**

(54) **VORRICHTUNG ZUM EMPFANG VON SEKUNDÄRRADARSIGNALEN MIT QUASI DYNAMISCHER ODER DYNAMISCHER SEKTORISIERUNG DES ZU ÜBERWACHENDEN RAUMES UND VERFAHREN HIERZU**

DEVICE FOR RECEIVING SECONDARY RADIO SIGNALS WITH QUASI-DYNAMIC OR DYNAMIC SECTORING OF THE SPACE TO BE MONITORED AND CORRESPONDING METHOD

DISPOSITIF POUR LA RÉCEPTION DE SIGNAUX RADAR SECONDAIRES AVEC SECTORISATION QUASIDYNAMIQUE OU DYNAMIQUE DE L'ESPACE À SURVEILLER, ET PROCÉDÉ À CETTE FIN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **27.11.2008   DE 102008059424**

(43) Veröffentlichungstag der Anmeldung:
**10.08.2011   Patentblatt 2011/32**

(73) Patentinhaber: **iAd Gesellschaft für Informatik, Automatisierung und Datenverarbeitung mbH**
**90613 Grosshabersdorf (DE)**

(72) Erfinder:
• **HAMPEL, Hermann**
  **90613 Grosshabersdorf (DE)**

• **BEROLD, Ulrich**
  **90427 Nürnberg (DE)**
• **BUMILLER, Gerd**
  **90768 Fürth/Vach (DE)**
• **RECK, Christoph, Dipl-Ing.**
  **91052 Erlangen (DE)**

(74) Vertreter: **Dreykorn-Lindner, Werner**
**Patentanwalt**
**Steinlachstrasse 2**
**90571 Schwaig (DE)**

(56) Entgegenhaltungen:
**WO-A1-2005/010553     WO-A1-2009/106320**

**Beschreibung**

Die Erfindung betrifft gemäß Patentanspruch 1 eine Vorrichtung zum Empfang von Sekundärradarsignalen mit quasi dynamischer oder dynamischer Sektorisierung des zu überwachenden Raumes und gemäß Patentanspruch 12 ein Verfahren hierzu.

Primärradar bezeichnet Radaranlagen, die das Radar-Prinzip ausschließlich und unmittelbar umsetzen, d. h. die unmittelbaren (passiven) Echos zuvor ausgestrahlter Hochfrequenzimpulse analysieren. Der Begriff dient der Abgrenzung zum Sekundärradar, einer Technik, bei der aktiv von den erfassten Objekten erzeugte Echos verwendet werden. In der Praxis kommt häufig eine Kombination beider Methoden zum Einsatz (z.B. in der Flugsicherung beim Bodenradar). Primärradaranlagen (primary surveillance radar PSR) sind nicht darauf angewiesen, dass ein Objekt aktiv Signale generiert, um es erfassen zu können. Dies ist z. B. im Bereich der Flugsicherung von Bedeutung, da Flugzeuge auch bei ausgefallenem Flugfunktransponder erfassbar sein müssen. Bei Störungen der verwendeten Frequenz können Primärradaranlagen problemlos auf andere Frequenzen wechseln. Bei Sekundärradaranlagen (secondary surveillance radar SSR) kann ein solcher Wechsel nur dann erfolgreich durchgeführt werden, wenn er auch von den zu erfassenden Objekten vollzogen wird. Primärradar kann nur die aus dem reflektierten Echo ermittelbaren Größen (z. B. Richtung, Entfernung und Geschwindigkeit) feststellen, während der Empfänger bei Sekundärradar weitere Angaben in seine Antwort integrieren kann (z. B. eine Kennung). Primärradaranlagen PSR benötigen eine erheblich höhere Sendeleistung als vergleichbare Sekundärradarsysteme SSR, um die gleiche Reichweite erzielen zu können.

Das Sekundärradarprinzip ist ein Ortungsverfahren mit Laufzeitmessung, das im Gegensatz zur herkömmlichen Radartechnik nicht mit der am Ziel reflektierten Energie, also dem passiven Echo eines Zieles arbeitet, sondern bei dem sich an Bord des Zieles ein aktives Antwortgerät (Transponder) befindet. Bei einem Sekundärradar antworten die Ziele aktiv auf ein empfangenes Radarsignal mit dem Aussenden einer Antwort auf der gleichen oder einer anderen Frequenz. Hierzu wird der Radarimpuls mit einer Antenne empfangen und löst die Ausstrahlung eines charakteristischen "Echos" über die gleiche Antenne aus. Diese Antwort kann eine charakteristische Modulation oder ein Datenpaket sein. Wesentlicher Vorteil des Sekundärradars gegenüber dem Primärradar ist dessen deutlich höhere Reichweite sowie die Möglichkeit der Identifizierung des Zieles. Mit dem Primärradar werden sichere Informationen über Richtung, Höhe und Entfernung der Ziele und das völlig unabhängig vom Ziel gewonnen. Ein Sekundärradar stellt zusätzliche Informationen, wie Kennung, Identifizierung und ebenfalls Höhe der Ziele bereit. Allerdings ist dazu die Mitarbeit des Ziels notwendig. Fehlt diese Mitarbeit, zum Beispiel weil der Transponder defekt ist, so ist das Sekundärradar nicht arbeitsfähig und dieses Flugobjekt wird nicht erkannt. Deshalb arbeiten die meisten Sekundärradargeräte in einer Kombination mit einem Primärradar. Im Jahre 1953 wurde der internationale Standard Mark X formuliert (dieses System war noch sehr einfach strukturiert und arbeitete im Frequenzband 950 bis 1150 MHz auf 12 verschiedenen Kanälen mit einem Frequenzabstand von 17 MHz) und mit vielen Erweiterungen bis in das Jahr 2008 hinein als Grundlage für die zivile Nutzung des Sekundärradars in der Flugsicherung definiert. In älterer Literatur werden noch die Begriffe Super Beacon und Discrete Address Beacon System (DABS) als ehemalige Bezeichnungen für das Mode S- Verfahren im Standard Mark XII verwendet.

In der Regel besteht das Sekundärradarsystem aus zwei Geräten: dem Abfragegerät (Interrogator) und dem Antwortgerät (dem Transponder). In der Luftfahrt sind die Abfragegeräte teilweise Bodenstationen, teilweise kann ein Interrogator wie die Transponder in einem Flugzeug angeordnet sein. Der Interrogator sendet abhängig von der jeweiligen Modulationsart (dem sogenannten Mode) eine beispielsweise mit verschiedenen Impulsen verschlüsselte Abfrage aus. Diese Impulse werden vom Transponder empfangen und ausgewertet. Je nach dem Inhalt der Abfrage wird eine Antwort generiert, wieder verschlüsselt und ausgesendet. Durch die Laufzeitmessung zwischen Sendeimpulsen und dem Antworttelegramm kann die Entfernung zwischen Abfragegerät und Antwortgerät errechnet werden. Durch die im Transponder durch Decodierung und Codierung verursachten Verzögerungen ist diese Entfernungsberechnung nur korrekt, wenn diese zusätzliche Verzögerungszeit bekannt ist.

Beim Übertragungsprotokoll auf dem sogenannten Uplink-Weg (Abfrage von der Bodenstation hoch zum Flugzeug), welches generell auf 1030 MHz gesendet wird, sind einfache Abfragen (Mode-A und Mode-C) von selektiven Abfragen (Mode-S) zu unterscheiden, bei denen innerhalb des P6- Impulses eine Impulsmodulation mit differenzieller Phasenumtastung (DPSK) genutzt wird. Das auf der Frequenz 1090 MHz übertragene Antworttelegramm ist bei den einfacheren Modi (A und C) 20,3 $\mu s$ lang, besteht aus 2 bis 15 Impulsen mit einer Impulsdauer von je 0,45 $\mu s$ ($\pm$0,1 $\mu s$) und hat durch den verwendeten vierstelligen Oktalcode nur einen Wertevorrat von 4.096 verschiedenen Identifizierungscodes (Mode A) bzw. Flughöhen (Mode C). Die beiden Rahmenimpulse F1 und F2 im Abstand von 20,3 $\mu s$ müssen mindestens vorhanden sein, damit vom Empfänger diese Impulse als gültige Antwort erkannt werden. Dies entspricht bei der Wellenausbreitung einer Entfernung von 3 km. Zwischen den Rahmenimpulsen gibt es im Abstand von 1,45 $\mu s$ insgesamt 13 Positionen für die Codierimpulse. Von diesen werden im Mode A und C nur maximal 12 für die Übertragung der gewünschten Information in einem Oktalcode genutzt. Die drei Leerstellen dürfen nicht durch Impulse belegt sein, da sonst manche Decoder die gesamte Antwort als Störung interpretieren und somit verwerfen. Das Antwort- Telegramm enthält jedoch keinerlei Information über den Mode. Der Decoder des Sekundärradars geht immer davon aus, dass die empfangene Antwort zu dem als letztes abgefragten Mode passt. Die Impulse zwischen den Rahmenimpulsen beinhalten den Code, der abhängig vom Abfragemode die gewünschte Information als Oktalzahl enthält. Durch die Anzahl von 12 möglichen Impulsen ist der Wertevorrat der eindeutigen Informationen auf 4096 begrenzt. Zusätzlich zu den 12 Informationsimpulsen kann ein sogenannter SPI-Impuls (Special Purpose Identification) in der Flugsicherung dafür genutzt werden, die Antwort zur Identifizierung an der Anzeige des Fluglotsen besonders hervorzuheben. Auf Anforderung des Bodenpersonals drückt der Pilot am Bedienpult des Transponders einen Knopf und dann wird für eine bestimmte Zeit (18±1 s lang) der SPI-Impuls an das Antwort- Telegramm angefügt. Durch die aus historischen Gründen außerhalb der Rahmenimpulse gewählte Position entstehen einige Probleme in der weiteren Verarbeitung. Gemäß ICAO wird der SPI-Impuls nur bei einer Antwort auf den Mode A generiert.

Die Antwort auf selektive Abfragen im Mode-S beinhaltet ggü. Mode-A/C-Antworten eine größere Menge an Informationen, die in Form einer Pulse Position Modulation (PPM) übertragen werden.
Auf dem Downlink- Weg (Antwort vom Flugzeug zum Abfragenden) ist es ungünstig, wie im Uplink die differenzielle Phasenumtastung (DPSK) zu verwenden, da die Übertragungssicherheit wird durch die extremen Temperaturschwankungen, denen ein Transponder in großen Flughöhen ausgesetzt wird, ungünstig beeinflusst wird. Eine Besonderheit der Mode S- fähigen Transponder ist der sogenannte Squitter-Mode, bei dem der Transponder unabhängig von einer Abfrage und in regelmäßigen Abständen selbständig zum Beispiel GPS- Position und Identifizierung als Rundspruch sendet (ADS-B Automatic Dependent Surveillance - Broadcast).

Der Begriff Garbling wird in der Sekundärradartechnik für eine besondere Art von Störungen des Empfangs verwendet. Es handelt sich um eine Überlappung der Aussendungen von zwei oder mehreren Transpondern, deren gleichzeitiger Empfang die übertragene Information verfälschen kann. Befinden sich im Erfassungsbereich der scharf bündelnden Radarempfangsantenne zwei oder mehr Flugziele, deren radiale Entfernung kleiner als 3 km ist, so laufen bei Mode-A/C die Antworttelegramme teilweise ineinander. Noch häufiger treten Überlagerungen beim Empfang von ADS-B Telegrammen (Mode-S) auf, da einerseits die Transponder zeitlich unkoordiniert senden und in der Regel schwach- oder nichtbündelnde Antennen zum Einsatz kommen, was die Anzahl der möglichen Transponder innerhalb der Empfangskeule entsprechend erhöht.

Liegen zwei Aussendungen so übereinander, dass ihre Zeitraster nicht deckungsgleich übereinander liegen, so spricht man von nichtsynchronem Garbling. Solche Aussendungen können, zumindest bei Mode-A/C, häufig getrennt und einzeln richtig decodiert werden. Liegen zwei Aussendungen aber so übereinander, dass sie ein gemeinsames Zeitraster haben, handelt es sich um synchrones Garbling. Es lässt sich in der Decodierung nicht mehr feststellen, ob ein einzelner Impuls dem einen oder dem anderen oder gar beiden Telegrammen angehört. Dadurch würde es zur Decodierung völlig neuer und falscher Telegramme kommen, die mit den ursprünglichen Aussendungen nichts mehr zu tun haben, weshalb diese mehrdeutigen Telegramme gesperrt werden müssen. Schließlich kann bei Mode-A/C auch bei einer korrekten Antwort mit vorhandenem C2- und SPI-Impuls der Rahmen ein zweites Mal auftreten. Dieser Spezialfall wird Scheingarbling genannt.

Der Prozess der Trennung von falschen bzw. mehrdeutigen von korrekten Telegrammen wird "Degarbling" genannt. Beim Degarbling besteht das Problem in der Erkennung von dekodierbaren und nichtdecodierbaren Varianten des Garblings. Der Mechanismus zur effektiven Nutzung des Empfangssignals, das in der Regel das größte empfangene Signal ist, durch Ausblenden bzw. Reduzieren von Störsignalen ist beispielsweise beschrieben im RTCA-Standard DO-260A für Sekundärradarempfänger (Mode-S / ADS-B) und ausgelegt für einen Kanal zwischen einem Sender und einem Empfänger, d.h. unter Verwendung von jeweils nur einer Sende- und Empfangsantenne. Um die beschriebenen Garbling-Fälle zu erkennen und entsprechend verarbeiten zu können, werden spezielle Degarblingschaltungen eingesetzt.

Beim Mode-A/C besteht beispielsweise der technische Ablauf in diesen Schaltungen in einer Speicherung des empfangenen Impulsmusters und dem Vergleich mit den Rahmenimpulsen. Die in der Degarblingschaltung benötigten Verzögerungsleitungen mit den Abgriffen von 1,45 µs (Takt des Antwortimpulsrasters) können auch als Schieberegister realisiert sein. Der gesamte Vorgang kann ebenso in einer prozessorgesteuerten Schaltung oder als Programm ablaufen. Der Funktionsablauf umfasst dabei folgende Verarbeitungsschritte: zunächst Erkennen von Rahmenimpulsen durch eine erste Verzögerungsleitung, dann im zweiten Verarbeitungsschritt Verzögern der erkannten Rahmenimpulse durch eine zweite Verzögerungsleitung, im dritten Verarbeitungsschritt prüfen, ob Rahmenimpulse ineinanderlaufen (beispielsweise durch eine dritte Verzögerungsleitung und nachfolgender ODER-Verknüpfung) und schließlich - wenn nein erkannt wird (Takt bei 15,95 µs) - Freigabe der Decodierung. Bei Auftreten von Scheingarbling wird genau dieser Takt einfach nicht verwendet.

In der Flugsicherung werden zur Reduktion der Überlagerungswahrscheinlichkeit (d.h. als Variante des Degarbling) bei Sekundärradarsystemen häufig Phased-Array-Antennen (Phased Array = Phasengesteuertes Feld) eingesetzt, das sind Gruppenantennen mit starker Richtwirkung, die eine Bündelung der Strahlungsenergie durch die Anordnung und Verschaltung von Einzelstrahlern erreichen. Die Bündelung in einer Raumrichtung ist umso stärker, je größer die Querausdehnung der Antenne in dieser Richtung ist. Daher sind Radarantennen in der Regel horizontal angeordnet, um eine Bündelung im horizontalen Richtdiagramm zu erreichen. Wichtig für das Prinzip dieser Antennen ist die Interferenz, das heißt, eine phasenabhängige Überlagerung von zwei oder (meist) mehreren Strahlern. Dabei ist zu beobachten, dass sich gleichphasige Signale verstärken und gegenphasige Signale gegenseitig auslöschen. Wenn also zwei Strahler im gleichen Takt ein Signal aussenden, so , wird eine Überlagerung erzielt - das Signal wird in der Hauptrichtung verstärkt und in den Nebenrichtungen abgeschwächt. Werden die Einzelstrahler unterschiedlich angesteuert, d.h. wird beispielsweise das Signal vom einem (z.B. unteren) Strahler um 10° phasenverschoben (hier also früher) gesendet, als von einem anderen (z.B. oberen) Strahler, wird die Hauptrichtung des gemeinsam abgestrahlten Signals entsprechend (z.B. hier nach oben) verschoben. Lässt sich die phasenverschobene Ansteuerung der Einzelstrahler elektronisch verändern, so ist damit auch das Antennendiagramm der Antenne elektronisch schwenkbar.

Die Phased-Array-Antenne nutzt also die Phasenverschiebung der in einer. Matrix angeordneten Sendeelemente, um durch Interferenz eine Bündelung zu erzielen. Die Sendeenergie wird in der gewünschten Richtung verstärkt, während die unerwünschten Richtungen durch destruktive Interferenz ausgelöscht werden. Durch gezielte Abweichung der Phasenlage kann das Richtdiagramm asymmetrisch beeinflusst werden, um z. B. ein Aufklärungsradar mit einem auch nach schräg oben erweiterten Richtdiagramm zu versehen, es jedoch nach unten zu begrenzen. Um hierfür den Abstrahl- / Empfangswinkel nach oben zu verlagern, muss nur der Phasenwinkel der unteren Elemente früher einsetzen, der Phasenwinkel der oberen Elemente entsprechend später. Durch die Laufzeitunterschiede hat die Energie der unteren Strahler nicht mehr in der Antennenmitte, sondern weiter oben Phasengleichheit mit der Energie der oberen Strahler. Dadurch wird die Wellenfront gegenüber der Antennenfläche angewinkelt, und der Abstrahlwinkel neigt sich nach oben. Die Phasendifferenz zwischen den Strahlern ist zwischen den Antennenelementen konstant und eventuelle Laufzeitunterschiede in der Zuleitung müssen mit berücksichtigt werden.

Wenn also eine unterschiedliche Phasendifferenz eingestellt wird, indem zum Beispiel der Phasenwinkel der äußeren Elemente nachgestellt und der der inneren vorgestellt wird, so wird die Bündelung der Gesamtantenne verändert, das heißt, die Antennendiagrammform ändert sich. Diese Methode wird bei einem Multimode-Radar genutzt, um von einem breiteren Diagramm zur Zielsuche auf ein sehr schmales Diagramm zur genauen Zielbegleitung umzuschalten.

Für ein sehr schmales Antennendiagramm werden sehr viele Einzelstrahler benötigt, deren Phasendifferenz zwischen den Strahlern sich zum Rand der Antennengruppe hin addieren. Die Phasenschieber müssen also eine Phasenverschiebung von bis zu 360° erreichen. In der Praxis werden zum Beispiel verschiedene Umwegleitungen verwendet, die bei einem 4-Bit Phasenschieber in Schritten von 22,5° in die Speiseleitung geschaltet werden. Der Abstrahlwinkel kann zwar theoretisch fast $\pm 90°$ betragen. In der Praxis werden in der Regel aber nur maximal $\pm 60°$ erreicht, da sich die Bündelung des Antennendiagramms mit größer werdendem Abstrahlwinkel rapide verschlechtert. Für eine Suche im Vollkreis um die Antenne herum werden in der Praxis drei Antennengruppen im Winkel von 120° verteilt. Effektiver sind vier Gruppen im Abstand von 90°, wie es zum Beispiel beim APAR, einem Radargerät der Marine verwendet wird.

Es können beliebige Antennenkonstruktionen als Einzelstrahler in einem Antennenfeld verwendet werden. Für eine Phased Array Antenne ist entscheidend, dass die einzelnen Strahler mit einer geregelten Phasenverschiebung angesteuert werden und somit die Hauptrichtung der Abstrahlung verändert wird. Um eine Bündelung sowohl horizontal als auch vertikal zu erreichen, werden sehr viele Strahler in einem mehrdimensionalen Antennenfeld verwendet. Die Antenne des RRP-117 besteht z.B. aus 1584 Strahlern. Vorteile gegenüber konventionellen rotierenden Radarantennen sind zum einen eine kostengünstigere Ausführung (keine mechanische Belastung durch Rotation und damit verbundener teurer Schutz gegen Umgebungseinflüsse) sowie eine flexible und schnelle Einstellung des aktuellen Einfallswinkels, da keine mechanische Nachführung nötig ist, sondern dieser rein elektronisch eingestellt wird.

Die frequenzabhängige Strahlschwenkung ist ein Sonderfall der Phased-Array-Antenne, bei welcher die Strahlschwenkung völlig ohne elektronische Phasenschieber durch die Sendefrequenz gesteuert wird und die Strahlschwenkung eine Funktion der Frequenz. ist. Beispielsweise wird eine vertikale Antennengruppe seriell gespeist und auf der Grundfrequenz erhalten alle Strahler eine Leistung gleicher Phase durch konstruktiv gleiche Umwegleitungen, die eine Phasenverschiebung von $n \cdot 360°$ bewirken. Alle Strahler strahlen also mit gleicher Phase zur gleichen Zeit und der resultierende Strahl befindet sich somit senkrecht zur Antennenebene. Wenn nun die Sendefrequenz um wenige Prozent erhöht wird, stimmt die konstruktiv festgelegte Länge der Umwegleitungen nicht mehr, da die Umwegleitung nun etwas zu lang ist. Es tritt eine Phasenverschiebung von Strahler zu Strahler auf, wobei der erste Strahler diese, wenige Prozent eher strahlt als der nächste benachbarte Strahler und so weiter, wodurch der resultierende Strahl nach oben geschwenkt wird.

Für den Empfang von Squitter-Telegrammen können scharf bündelnde Antennen in der Regel nicht verwendet werden, da meist vorab nicht bekannt ist, wann welches Flugzeug sendet, und damit auch nicht, aus welcher Empfangsrichtung ein einfallendes Signal zu erwarten ist, was eine exakte Ausrichtung eines sehr schmalen Antennendiagramms unmöglich macht. Eine Möglichkeit für Degarbling besteht hier in der Verwendung von Sektorantennen, die den gesamten zu beobachtenden Raum in (in der Regel 4 bis 12) kleinere Sektoren aufgeteilt. Hierdurch ergibt sich eine Reduktion der Häufigkeit von Überlagerungen in den einzelnen Sektoren. Zur Realisierung der Sektorantennen werden in der Regel mechanisch fest ausgerichtete Richtantennen verwendet.

Weiterhin werden im Bereich der Kommunikationstechnik seit einigen Jahren Ansätze verfolgt, um durch den geschickten Einsatz von Mehrantennensystemen die Übertragungskapazität der Kanäle zu erhöhen. Die anfänglich mit den Schlagwörtern SDMA (Space Division Multiple Access) und MIMO-Systeme (Multiple Input Multiple Output) verbundenen Ansätze zielten darauf ab, durch entsprechende Signalverarbeitung der Signale mehrerer Antennen in mehreren zugehörigen Empfängereinheiten jeweils eine Fokussierung auf einen bestimmten Raumsektor zu erzeugen. Inzwischen ist man davon jedoch größtenteils wieder abgekommen bzw. verfolgt den Grundansatz mit anderen Optimierungskriterien und damit einer anderen Interpretation der Daten, wobei die Optimierung nicht mehr über eine geometrische Unterteilung in Sektoren, sondern z.B. im Hinblick auf eine Minimierung der Fehlerraten erfolgt.

Bei Sekundärradarsystemen nach dem Stand der Technik können folgende Probleme bzw. problematische Situationen auftreten:

Mit steigender Anzahl von Sendern (Flugzeugen) im Beobachtungsraum steigt auch die Wahrscheinlichkeit von Kollisionen der Aussendungen von mehreren Sendern an einem Empfänger. Diese Wahrscheinlichkeit wird einerseits nochmals erhöht, wenn jeder Transponder nicht nur einen oder wenige Interrogatoren empfangen kann und darauf antwortet, sondern zahlreiche, wodurch die Sendehäufigkeit eines Transponders deutlich ansteigt. Die zu den Antworten noch hinzukommenden Squitteraussendungen (z.B. für ADS-B) erhöhen die Sendehäufigkeit abermals. Treten dadurch am Empfänger Überlagerungen mehrerer Transponder-Aussendungen auf, so führen diese zur Zerstörung der einzelnen Datenpakete oder im günstigsten Fall zur Detektion lediglich des stärksten Empfangssignals.

Ein weiteres Problem ist das Auftreten von Mehrwegeempfang durch Reflektion des Transpondersignals an verschiedenen Objekten, die am Empfänger zu ungünstiger Überlagerung der unterschiedlichen Pfade (direkter Pfad und/oder Reflektionspfad(e)) führen kann. Dadurch können starke Verzerrungen des Signals bis hin zur Auslöschung auftreten.

Dies tritt insbesondere am Flughafengelände bzw. in Flughafennähe auf, wo sich zahlreiche reflektierende Objekte in der Nähe des direkten Pfads zwischen Sender und Empfänger befinden.

Aus der EP 1 953 565 A1 ist ein Sekundär-Überwachungs-Radarsystem und ein Verfahren zum Analysieren der Antworten für das Sekundär-Überwachungs-Radarsystem bekannt, bei dem auf der Grundlage der verschiedenen Moden die Fähigkeit des Beseitigens eines Mode A/C-Ziel-Berichts verbessert wird. Dabei sind die Moden in Mode A, in Mode C und in Mode S eingeteilt. Mode A ist für das Erhalten von Identifikationsinformation eines Flugzeugs vorgesehen und Mode C wird für das Erhalten von Höhe-Informationen verwendet. Mode S hat eine einzeln selektive benennende Funktion mit einer ID (Kennung, eine 24 Bitadresse), welche jedem Flugzeug zugeordnet ist. Mittels Mode S können Fahrstrecken-Information und Geschwindigkeits-Information zusätzlich zu den Informationen der obenerwähnten Arten (Identifikationsinformation und Höhe-Information) erhalten werden. Das Sekundär-Überwachungs-Radarsystem identifiziert ein Flugzeug, indem es Abfragen zu einem Transponder überträgt, der in einem Flugzeug installiert wird, indem es die Antworten empfängt, die den Abfragen entsprechen und indem es den Inhalt der Antworten analysiert. Hierzu weist das Sekundär-Überwachungs-Radarsystem gemäß der EP 1 953 565 A1 ein auf dem Boden angeordnetes Abfragegerät und eine Antenne, welche horizontal um 360 Grad drehbar ist, sowie im Flugzeug installiert einen Transponder und eine Antenne auf. Das Abfragegerät umfasst eine Übertragungseinheit, eine Empfangseinheit, eine Signalverarbeitung-Einheit und einen Kombinierer. Die Übertragungseinheit und die Empfangseinheit werden an die bodenseitige Antenne und die Signalverarbeitung-Einheit wird an die Übertragungseinheit und an die Empfangseinheit angeschlossen. Ein Abfragezyklus des Abfragegeräts umfasst dabei fünf verschiedene Abfragen und der Transponder sendet Antworten entsprechend dieser Abfragen zurück. Diese Antworten werden von der Antenne empfangen und der Empfangseinheit zugeführt. Die daran angeschlossene Signalverarbeitung-Einheit interpretiert den Inhalt von jeder der erhalten Antworten und erzeugt auf der Grundlage dieser Auswertung einen Mode S Ziel-Bericht und einen Mode A/C-Ziel-Bericht. Wenn ein Flugzeug durch einen Mode S Ziel-Bericht identifiziert werden kann, weist der Kombinierer einen Mode A/C Ziel-Bericht (unter Beurteilung der positionsgemäßen Wechselbeziehungen und des bisherigen Flugverlaufs), welcher dieses identifizierte Flugzeug betrifft, zurück.

Weiterhin ist aus der US 2004/0234016 A1 ein Verfahren und eine Vorrichtung zum Antigarbling beim Empfang eines Breitband-Funksignals, insbesondere GPS-Signals, bekannt, bei dem eine räumliche Filterung des Signals mittels eines räumlichen Kombinierers, der eine gewichtete Summe der verschiedenen Strahlungselemente der Antenne in Amplitude und Phase der Signale erzeugt, durchgeführt wird. Im Einzelnen beruht das dort verwendete Verfahren auf der CSLC-Antigarbling Technik mit einer statischen Anordnung der verschiedenen unabhängigen Empfang-Wege der Strahlungselemente, einer Auswahl unter den Empfang-Wegen (Haupt- und Hilfs-Empfangsweg) und einer dynamischen Beeinflussung von einem sogenanntem "degarbled" Empfang-Weg, d.h. dem Signal des Haupt-Empfang-Wegs wird eine lineare Kombination der Signale der Hilfs-Empfangswege hinzugefügt, die in Amplitude und Phase unter Zuhilfenahme von dynamisch einstellbaren Koeffizienten gewichtet sind. Die Leistungsfähigkeit der CSLC-Antigarbling Technik hängt von der Genauigkeit der Ermittlung und Einstellung der Koeffizienten (Amplitude- und Phasen-Gewichtung) ab. Beim Gegenstand der der US 2004/0234016 A1 sind hierbei ein spezieller Testsignalgenerator, welcher kalibriert wird und mindestens zwei Versionen eines Testsignals, vorzugsweise eine gespreiztes Testsignal, erzeugt und eine empfangende Gruppenantenne mit parallel liegenden identischen Verarbeitungsketten vorgesehen. Der räumliche Antigarbling -Filter führt eine lineare Kombination der Signale durch, die durch die verschiedenen Strahlungselemente der Antenne empfangen sind. Sein Arbeitsprinzip beruht auf der Annahme, dass die Nutzsignale und die Stör-Signale nicht aus den gleichen Richtungen aufgenommen worden sind. Eins der Probleme, die die CLSC-Technik auf dem Gebiet der Radartechnik aufwirft, ist die Bestimmung der Koeffizienten des räumlichen Antigarbling-Filters im Rahmen der Breitband-Nutzsignale (gespreiztes Band-Signal), da die parallel liegenden identischen Verarbeitungsketten sehr empfindlich sind, welche die Signale des Haupt-Empfang-Wegs und Signale der Hilfs-Empfangswege liefern. Diesem Problem wird durch den Testsignalgenerator in Verbindung mit einer Bank von automatischen Entzerrern (einstellbares Entzerrer-Filter, welches von einem digitalen Filter programmiert wird), sowie zwei Spektrum-Analysatoren (Ermittlung der Autokorrelation sowie der FFT Fast Fourier Transformation) und Subtrahiern gelöst, wobei der Subtrahierer die gemessene Übertragungsfunktion subtrahiert. Dabei ist auch vorgesehen, die Bänke der automatischen Entzerrer im Verlauf des Kalibrierungs-Betriebs mittels eines pseudozufälligen binären Codes als Testsignal, der zu den pseudozufälligen binären Codes, die im GPS-System verwendet werden orthogonal ist. zu justieren.

Schließlich ist aus der US 2006/0055586 A1 ein Sekundärradarsystem mit einer Sendeeinrichtung für Abfragesignale, einer Empfangseinrichtung für die empfangenen Antwortsignale sowie einer Verarbeitungseinrichtung bekannt, bei dem der vorbestimmte Winkelbereich für die Übertragung von Abfragen mit der Strahlbreite der Antenne (Antennenkeule) verglichen wird und bei dem während jeder so genannten roll-call Periode die Abfragen in Richtung des Azimut reduziert werden, welche kaum eine Möglichkeit für den Empfang von Antworten aufweisen. Hierzu vergleicht die Verarbeitungseinrichtung die Strahlbreite der Antenne mit den Vorhersage-Position-Bereichen, fährt mit den selektiven Abfragen in jeder roll-call Periode fort, wenn die Vorhersage-Positionbereiche schmaler als die Strahlbreite sind, und reduziert die selektiven Abfragen an jeder roll-call Periode, wenn die Vorhersagewinkel-Bereiche breiter als die Strahlbreite sind. Es ist auch vorgesehen, den Abfragezyklus für einen Transponder des ATCRBS (air traffic control radar beacon system) in zwei Zeiträume (für ATCRBS oder Mode S Antworten) zu unterteilen, insbesondere um die Winkel-Bereiche für das Übertragen der Abfragen in Übereinstimmung mit der Vorhersage zu variieren. Dabei wird im SSR Modus S, da die Azimutwinkel-Bereiche für das Übertragen der Abfragen erweitert sind, wenn die Ziele in Kurzstrecken lokalisiert werden, die Belegungszeit des Funkkanals erweitert. Weiterhin wird die höchste Priorität den Azimutwinkel-Bereiche für das Übertragen der Abfragen innerhalb der Strahlbreite der Antenne und die zweithöchste Priorität den Zielen im Fernbereich zugeordnet. Insgesamt kann dadurch die Belegungsdauer des Funkkanals durch die Abfragen reduziert werden.

Wie die vorstehende Würdigung des Standes der Technik aufzeigt, beruht in der Regel bei bekannten Sekundärradarsystemen die Erkennung der Ziele auf einer entsprechenden Analyse der empfangenen Sekundärradarsignale in den verschiedenen Moden, d.h. in der Erkennung von dekodierbaren und nichtdecodierbaren Varianten des Garblings (Störungen beim Empfang) bei der Auswertung des Antworttelegramms. Dabei erfolgt die Radarüberwachung des zivilen Luftverkehrs in der Regel mit drehbaren Richtantennen, der Empfang von Squitteraussendungen mit Rundsichtantennen oder mechanisch fest stehenden Sektorantennen. Im militärischen Bereich kommen in der Radartechnik auch mechanisch feststehende Mehrantennenanordnungen zum Einsatz, wobei der Einfallswinkel nicht durch mechanische Abgrenzung und Rotation vorgegeben wird, sondern durch Phasensteuerung der einzelnen Antennensignale erfolgt und elektronische Phasenschieber dabei zur Anpassung der Phasen der HF-Signale dienen. Die Steuerung erfolgt derart, dass durch die angepasste Überlagerung der Signale der Einzelantennen die resultierende Charakteristik der "Gesamtantenne" jeweils nur einen gewissen Bereich des Einfallswinkels fokussiert und damit ein elektronisches Schwenken der "Keule" bewirkt wird. Anwendungen hierbei sind beispielsweise die radargestützte Zielverfolgung, z.B. bei Raketen. Hierbei werden auch Antennenarrays eingesetzt, wobei nur ein Beam für ein Objekt verwendet wird, d.h. es werden (in der Regel) keine Multi-Beams verwendet. Vorteile gegenüber konventionellen rotierenden Radarantennen sind zum einen eine kostengünstigere Ausführung (keine mechanische Belastung durch Rotation und damit verbundener teurer Schutz gegen Umgebungseinflüsse) sowie eine flexible und schnelle Einstellung des aktuellen Einfallswinkels, da keine mechanische Nachführung nötig ist, sondern dieser rein elektronisch eingestellt wird.

Schließlich ist aus der WO 2005/010553 A1 ein passives Kollisionsverhinderungssystem mit einer Vorrichtung zur Peilung der Richtung mit Peilantennen und Bestimmung der Position und Entfernung mittels eines Beobachter-Flugzeugs bekannt. Im Einzelnen werden in dem mit GPS ausgestatteten Beobachterflugzeug die Anworttelegramme von im Überwachungsbereich befindlicher Flugzeuge, welche diese zur Bodenstation senden, ausgewertet. Hierzu ist am Beobachterflugzeug ein lineares oder zirkulares Antennenarray mit Richtantennen mit gleichen Antennenabständen angeordnet, wobei die im 1.090 MHz Bereich liegende Ausgangsignale der Antennenelemente jeweils einem Empfänger, welcher mit einem A/D-Wandler verbunden ist, zugeführt werden. Die am Ausgang der A/D-Wandler im komplexen Basisband anliegenden Signale werden einem einzigen digitalen Signalprozessor zugeführt, welcher feststellt, ob ein gültiges Signal der Mode A oder C empfangen wird und welcher alle nicht relevanten Signale herausfiltert. Das am Ausgang des DSP anliegende Signal, welches alle gültigen Information der Mode A oder C, nämlich die jeweiligen Ziel-Transponder ID und Höhe-Daten umfasst, wird zusammen mit den eigenen GPS-Daten über ein USB-Kabel einem am Bord des Beobachterflugzeugs befindliche Laptop, PDA oder Notebook Computer zur weiteren Verarbeitung zugeführt. Die im Laptop, PDA oder Notebook Computer durchgeführte Richtungsschätzung, welche auf den GPS-Daten und den Antworttelegrammen der im Beobachtungsbereich liegenden Zielflugzeuge (Laufzeitmessung zwischen Sendeimpulsen der Bodenstation und dem Antworttelegramm des jeweiligen Zielflugzeug zur Berechnung der Entfernung zwischen Bodenstation und Zielflugzeug) beruht, kann z.B. mittels der Schätzverfahren ESPRIT, MUSIC (Multiple Signal Classification), WSF (Weighted Subspace Fitting) erfolgen und das Ergebnis kann an einem am Bein des Piloten befestigten Display dargestellt werden. In diese Laufzeitberechnung geht die relative Entfernung c zwischen Beobachterflugzeug und Zielflugzeug sowie der Winkel $\alpha$ zwischen der Strecke "Beobachterflugzeug und Bodenstation" und der Strecke "Beobachterflugzeug und Zielflugzeug" (unter Berücksichtigung der Verzögerungszeit für das Erzeugen des Antworttelegramms im jeweiligen Zielflugzeug) ein. Um die Zahl der Empfänger zu reduzieren können auch schaltbare Richtantennen des Antennenarrays vorgesehen werden und der Pilot kann zusätzlich durch ein Sprachsignal, beispielsweise "Zielflugzeug auf 10 Uhr unten und nah" oder "Zielflugzeug auf 2 Uhr oben und nah", oder einen (in der Tonhöhe anschwellenden) Warnton vor dem Zusammenstoß gewarnt werden. Die Genauigkeit der Richtungsschätzung hängt dabei von einer Vielzahl von Faktoren ab, wie Signal-Rauschverhältnis SNR, der Anzahl von Messungen, der Anzahl von Empfangssignalen (Antworttelegrammen), der winkelmäßigen Trennung zwischen den unterschiedlichen Signalen, der Ableitung der Antennen-Muster Antwort in Bezug auf den Winkel, der Abweichung von einem idealen Antennenarray (Herstellungsfehler) und der Möglichkeit der Systemkalibrierung. Weiterhin besteht die grundsätzliche Möglichkeit, das Antennenarray zur Decodierung mehrerer Signale zu nutzen, wobei durch Fehler in der DOA-Schätzung die anschließende räumliche Filterung auf eine falsche Richtung ausgerichtet werden und dann die Decodierung fehlschlagen kann. Schließlich ist beim Gegenstand der WO 2005/010553 A1 keine Ausrichtung zur gezielten Unterdrückung eines Störers vorgesehen, es wird stets nur auf das Nutzsignal ausgerichtet, was in manchen Empfangssituationen nachteilig ist.

Der Erfindung liegt daher die Aufgabe zugrunde, ein Sekundärradarsystem bzw. eine Vorrichtung zum Empfang von Sekundärradarsignalen derart auszugestalten, dass eine bessere Separierung von Objekten, insbesondere bei hoher Anzahl von Objekten im Beobachtungsraum, und damit auch höhere Robustheit gegenüber Störsignalen sowie auch von Mehrwegeausbreitung erzielt wird.

Im Folgenden (Beschreibung und Ansprüche) sind unter gesendeten Sekundärradarsignalen sowohl Antworten auf Abfragen als auch Squitteraussendungen zu verstehen.

Diese Aufgabe wird, gemäß Patentanspruch 1, durch eine Vorrichtung zum Empfang von Sekundärradarsignalen mit quasi dynamischer oder dynamischer Sektorisierung des zu überwachenden Raumes, welche aufweist:

- eine aus N Antennenelementen bestehende Antennenanordnung zum Empfang von gesendeten Sekundärradarsignalen,
- eine am Anschlusspunkt des jeweiligen Antennenelements angeschlossene Signal-Verarbeitungseinheit zur parallelen Verarbeitung aller N Antennensignale mit einer Koppelmatrix mit einstellbaren Koeffizienten zur Sektorisierung eines zu überwachenden Raumes durch Überlagerung der Antennensignale mittels multiplikativ-additiver Verknüpfung der empfangenen Antennensignale,
- eine Steuereinrichtung, welche hierzu die Koppelpunkte der Koppelmatrix ansteuert, wobei ein Koeffizient $\alpha_{mN} = 1$ dem Zustand
- "durchgeschaltet" oder ein Koeffizient $\alpha_{mN} = 0$ dem Zustand "geöffnet" oder ein Koeffizient $\alpha_{mN} < 1$ dem Zustand "Dämpfung" oder ein Koeffizient $\alpha_{mN} > 1$ dem Zustand "Verstärkung" entspricht, bzw. welche den Weg der Antennensignale durch die Koppelmatrix und über mindestens einen Summierer/Additionsschaltung zu dem/den Empfängern m schaltet,

so dass jeder Empfänger m bei einer dynamischen Sektorisierung für jedes Empfangstelegramm eine andere mit bestimmten Koppelkoeffizienten gewichtete Überlagerung der Antennensignale erhält, wobei im quasi-dynamischen Fall die einstellbaren Koeffizienten über eine längere mehrere Stunden dauernde Zeit fest sind.

Weiterhin wird diese Aufgabe erfindungsgemäß bei einem Verfahren zur quasi dynamischen oder dynamischen Sektorisierung des zu überwachenden Raumes unter Verwendung einer Vorrichtung zum Empfang von Sekundärradarsignalen mit einer aus N Antennenelementen bestehenden Antennenanordnung zum Empfang der von Objekten gesendeten Sekundärradarsignalen, einer daran angeschlossenen Signal-Verarbeitungseinheit mit einer Koppelmatrix und mehreren mit der Koppelmatrix verbundenen Empfängern m gelöst, bei dem:

- die Ermittlung von Koeffizienten der Koppelmatrix quasi dynamisch durch Parametrierung oder dynamisch im Betrieb und nach Maßgabe des Nutzsignals des jeweils interessierenden Objekts eines Sektors und/oder unter Berücksichtigung eventuell vorhandener Störsignale erfolgt,
- die Koppelmatrix den Empfängern m jeweils eine mit bestimmten Koppelkoeffizienten gewichtete Überlagerung der Signale mittels multiplikativ-additiver Verknüpfung der empfangenen Antennensignale zur Verfügung stellt, wobei die Empfänger m bei einer dynamischen Sektorisierung für jedes Empfangstelegramm eine andere mit bestimmten Koppelkoeffizienten gewichtete Überlagerung der Antennensignale
- erhalten und wobei im quasi-dynamischen Fall die einstellbaren Koeffizienten über eine längere mehrere Stunden dauernde Zeit fest sind und
- jeder Empfänger m dabei eine andere Kombination von Koppelkoeffizienten erhält und die Koeffizienten dabei derart gewählt werden, dass für jeden Empfänger ein bestimmter Sektor des zu überwachenden Raums fokussiert wird,
- ein Sektor entweder ein einzelner zusammenhängender Raumbereich oder eine Kombination mehrerer Raumbereiche ist und

- die dynamische Anpassung der Beam-Formen durch Anpassung der Koeffizienten erfolgt.

Beim der erfindungsgemäßen Vorrichtung zum Empfang von Sekundärradarsignalen bzw. Sekundärradarsystem mit quasi dynamischer oder dynamischer Sektorisierung des zu überwachenden Raumes bzw. erfindungsgemäßen Verfahren überlagert eine zentrale Verarbeitungseinheit in vorteilhafter Weise die Antennensignale mittels einer Koppelmatrix und stellt den m Empfängereinheiten jeweils eine mit bestimmten Koppelkoeffizienten gewichtete Überlagerung der Signale zur Verfügung. Das den einzelnen Empfängereinheiten zugeführte Signal kann von diesen in gleicher Weise verarbeitet werden wie bei herkömmlichen Einzelantennensystemen. Dadurch können bei dem erfindungsgemäßen Sekundärradarsystem bzw. Verfahren vorteilhaft bisherige Einzelkanalempfänger bzw. darin implementierte Algorithmen weiterhin verwendet werden. Dabei erhält in der Regel jeder Empfänger eine andere Kombination von Koppelkoeffizienten, wodurch die einzelnen Empfänger auf verschiedene Sender oder verschiedene Empfängercharakteristiken (Beams) optimiert werden können. Insbesondere ist durch die sich ständig ändernden Positionen der Sender (Flugzeuge) eine dynamische Anpassung der Empfängercharakteristik besonders vorteilhaft. Dies ist jedoch nicht zwingend erforderlich, da die Koppelkoeffizienten auch einmalig ermittelt und dann statisch (quasi dynamisch) verwendet werden können. Diese einfache Variante der Erfindung, ist im Aufwand vergleichbar zur elektronischen Realisierung mehrerer fest ausgerichteter Sektorantennen.

Die Koeffizienten werden dabei derart gewählt, dass für jeden Empfänger ein bestimmter Sektor (auch Beam) des zu überwachenden Raums fokussiert wird. Ein Sektor muss dabei nicht notwendigerweise ein einzelner zusammenhängender Raumbereich sein, sondern kann eine mehr oder weniger beliebige Kombination mehrerer Raumbereiche sein. Erfolgt die Anpassung der Beam- Formen (durch Anpassung der Koeffizienten) dynamisch im Betrieb, so können diese jederzeit an die aktuellen Anforderungen bzw. die aktuelle Situation im Luftraum angepasst werden.

Die Optimierung eines Beam erfolgt dabei vorzugsweise derart, dass das Maximum des Beam möglichst über dem interessierenden Objekt (für den jeweiligen Empfänger) liegt. Die Optimierung eines Beam kann weiterhin auch vorzugsweise derart erfolgen, dass (für den jeweiligen Empfänger) Nullstellen des Beam über auszublendende Objekte gelegt werden. In einer weiteren vorzugsweisen Ausgestaltung kann die Optimierung eines Beam auch hinsichtlich der beiden vorgenannten Ziele (Maximum über interessierendes Objekt und Nullstellen über auszublendende Objekte) gemeinsam erfolgen. Diese Optimierungsmöglichkeiten kann insbesondere vorteilhaft angewendet werden, wenn bereits Informationen über die Position anderer Objekte (z.B. Transponder anderer Flugzeuge) vorliegen, aufgrund der Tatsache, dass sich diese Positionen nur relativ langsam im Vergleich zum Öffnungswinkel ändern. Die Positionen sind weiterhin durch kontinuierliche Bewegung der Objekte kurzzeitig einfach vorhersagbar durch Verfolgung der Bahnen (Trajektorien) der Objekte.

Vorzugsweise werden dabei einerseits feste Sektoren gebildet, andererseits Sektoren, die dynamisch gemäß den aktuellen Anforderungen nachgeführt werden. Durch diese Kombination lässt sich sowohl eine hohe Zuverlässigkeit (d.h. die Auswirkungen möglicher Fälle ungünstiger dynamischer Sektor/Koeffizientenwahl können durch zusätzliche feste Sektoren reduziert werden) als auch eine hohe Dynamik des Systems (durch dynamische Optimierung hinsichtlich Maximum und/oder Nullstellen, wie bereits ausgeführt) erzielen.

Die Kombination der den Antennen zugeordneten Signale in der zentralen Verarbeitungseinheit kann sowohl auf den ECB-Signalen (ECB: Equivalent Complex Baseband), als auch auf den HF- oder ZF-Signalen (HF: Hochfrequenz, ZF: Zwischenfrequenz) erfolgen. Im Rahmen- der Erfindung kann auch eine direkte AD-Umsetzung des HF-Signals (ohne Mischer) erfolgen. Vorzugsweise erfolgt die Kombination der den Antennen zugeordneten Signale in der zentralen Verarbeitungseinheit jedoch auf den ECB-Signalen. Dies hat den Vorteil, dass die ECB-Signale eine kompakte digitale Repräsentation erlauben und somit die notwendige Signalverarbeitung technisch einfach realisierbar ist.

In Weiterbildung der Erfindung ist, gemäß Patentanspruch 7, die Antennenanordnung als lineares oder zirkulares Array oder als matrixförmige Anordnung ausgebildet.

Diese Weiterbildung der Erfindung weist den Vorteil auf, dass bei geometrisch einfachen Anordnungen, insbesondere für feste Sektoren, die Berechnung der Koeffizienten besonders einfach erfolgen kann, da die Berechnung hierbei geometrisch erfolgen kann. Prinzipiell ist die Erfindung mit beliebigen Antennenanordnungen durchführbar.

Bei einer bevorzugten Ausgestaltung der Erfindung ist, gemäß Patentanspruch 8, die Antennenanordnung mit Antennenelementen in mehrdimensionaler Anordnung zueinander ausgebildet ist.

Diese Ausgestaltung der Erfindung weist den Vorteil auf, dass insbesondere die Detektion von weiter entfernten Objekten im Empfänger, insbesondere im Fall von Garbling, erleichtert wird, da die Signalstärken abhängig von der Entfernung sind. Daher kann das erfindungsgemäße Konzept auch als "räumliches Degarbling" betrachtet werden, da damit eine Signaltrennung im Raum und der Empfang mehrerer Signale, auch von schwächeren Signalen (also nicht nur des stärksten Signals) am Empfänger möglich ist.

Vorzugsweise ist, gemäß Patentanspruch 9, zur Aufteilung des Raums sowohl in horizontale als auch in vertikale Sektoren, die Antennenanordnung mit horizontal und vertikal angeordneten Antennenelementen ausgeführt.

Dadurch kann neben einer Aufteilung des Raums in horizontale Sektoren zusätzlich durch Berücksichtigung verschiedener Elevationswinkel auch eine vertikale Aufteilung des Raums erfolgen (→horizontale und vertikale Sektoren). Dies ermöglicht bei häufig weitgehend ähnlichen Flughöhen (Reiseflughöhen) auch die Trennung von Objekten in verschiedenen Entfernungen vom Empfänger.

In Weiterbildung der Erfindung ist, gemäß Patentanspruch 10, zur nachträglichen Integration in bestehende Systeme mit Einzelkanalempfängern der jeweilige Signalpfad zwischen Antenne und Empfänger aufgetrennt und die Signal-Verarbeitungseinheit zwischengeschaltet, welche die Vorverarbeitung der zugeführten Antennensignale durch Anwendung der Koppelmatrix und damit die Aufteilung in Sektoren realisiert und die resultierenden Signale den Einzelkanalempfängern wieder zur Verfügung stellt.

Diese Weiterbildung der Erfindung kann vorteilhaft besonders einfach realisiert werden, da die hinzugekommene Mehrantennenverarbeitung keine Anpassung der Verarbeitung/Algorithmen der Einzelkanalempfänger erforderlich macht. Die Rechenleistung zur Verarbeitung der einzelnen Sektoren muss bei dieser Weiterbildung vorteilhaft nicht zentral zur Verfügung gestellt werden, da die Rechenlast wieder auf die Einzelkanalempfanger verteilt wird.

Weitere Vorteile und Einzelheiten lassen sich der nachfolgenden Beschreibung von bevorzugten Ausführungsformen der Erfindung unter Bezugnahme auf die Zeichnung entnehmen. In der Zeichnung zeigt:

**FIG. 1**     das Prinzip der Mehrantennenempfangseinrichtung mit drei Richtkeulen,

**FIG. 2**     eine Ausführungsform der Signalverarbeitung zur Sektorbildung am Beispiel eines Empfängers für vier Antennen und zwei Sektoren,

**FIG. 3**     eine Ausgestaltung einer Richtcharakteristik mit einem Koeffizientensatz und Ausblendung des Störers D,

**FIG. 4**     eine Ausgestaltung einer Richtcharakteristik und Ausblendung mehrerer Störer,

**FIG. 5**     eine beispielhafte Ausgestaltung einer Sektoraufteilung unter Verwendung einer zirkularen Antennenanordnung,

**FIG. 6**     eine Ausgestaltung der Empfangscharakteristik beim Stand der Technik,

**FIG. 7**     eine Ausführungsform für die Integration in bestehende Einzelempfängersysteme

**FIG. 8**     die Bildung der Koeffizienten am Beispiel eines gleichförmigen, linearen Antennenarrays,

**FIG. 9**     eine weitere Ausführungsform der Signalverarbeitung nach **FIG. 2** mit Verarbeitung von ECB-Signalen und

**FIG. 10**    zeigt ein Beispiel für eine quasi-dynamische Anpassung der Sektoren für einen Flughafenbereich.

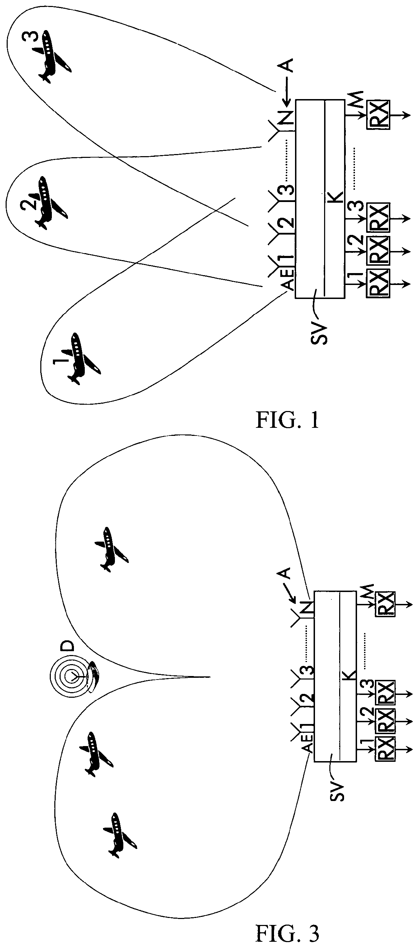

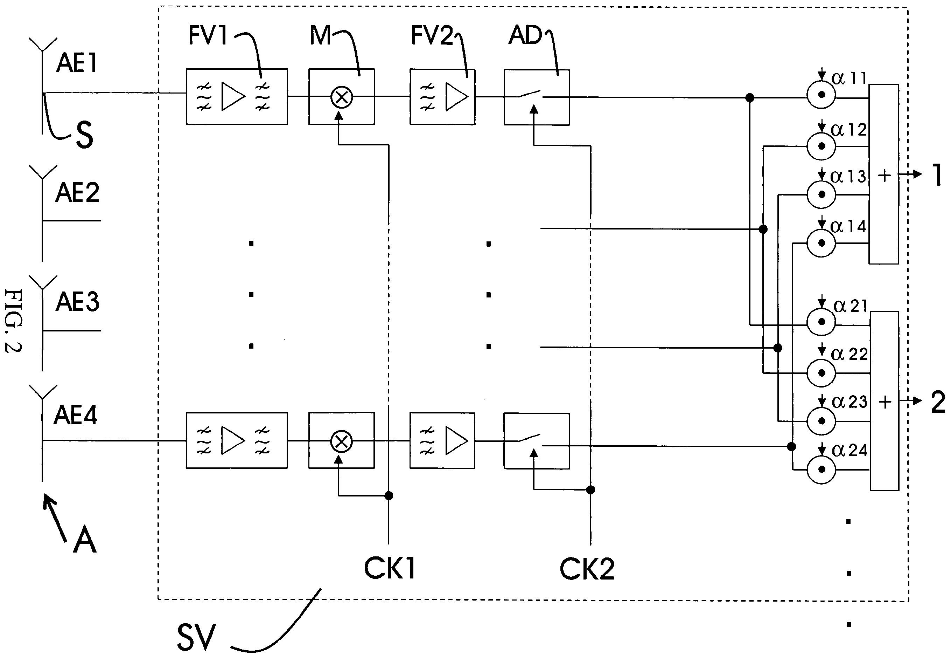

Das Sekundärradar bei 1090 MHz wird zum Zweck der Identifikation und der Übermittlung allgemeiner Flugdaten zwischen Flugobjekten, Bodenfahrzeugen, und Flugsicherung eingesetzt. **FIG. 1** zeigt das Prinzip der Mehrantennenempfangseinrichtung mit drei Richtkeulen. Zur quasi dynamischen oder dynamischen Sektorisierung des zu überwachenden Raumes, weist das erfindungsgemäße Sekundärradarsystem mindestens eine aus N Antennenelementen AE1, 2, 3, ..., N bestehende Antennenanordnung A zum Empfang von gesendeten Sekundärradarsignalen, eine an einen Anschlusspunkt S des jeweiligen Antennenelements AE1, 2, 3, ..., N angeschlossene Signal-Verarbeitungseinheit SV mit einer Koppelmatrix K mit einstellbaren Koeffizienten $\alpha_{11}$, $\alpha_{12}$, ... , $\alpha_{21}$, $\alpha_{22}$ ...., siehe **FIG. 2**) zur Sektorisierung eines zu überwachenden Raumes durch Überlagerung der Antennensignale und mindestens einen mit der Koppelmatrix K verbundenen Empfänger m (m = 1, 2, ... , M auf. Gemäß dem in **FIG. 1** dargestellten Beispiel mit drei gezeichneten Richtkeulen werden den eigentlichen Empfängereinheiten RX1, ..., RX3 den zugehörigen Koeffizientensätzen entsprechende Signale "angeboten", wobei eine in der Zeichnung nicht dargestellte Steuereinrichtung die Koppelpunkte $\alpha_{11}$, $\alpha_{12}$, ... , $\alpha_{21}$, $\alpha_{22}$ ...., siehe **FIG. 2**) der Koppelmatrix K ansteuert (beispielsweise $\alpha_{11} = 1$ entspricht "durchgeschaltet" oder $\alpha_{11} = 0$ entspricht "geöffnet" oder $\alpha_{11} < 1$ entspricht "Dämpfung" oder $\alpha_{11} >$ entspricht "Verstärkung") bzw. den Weg der Antennensignale durch die Koppelmatrix K und über mindestens einen Summierer/Additionsschaltung zu dem/den Empfängern m schaltet. Der/die Summierer/Additionsschaltung(en) können extern an den Ausgängen der Koppelmatrix K angeordnet oder in der der Koppelmatrix K integriert sein. Gleiches gilt für Dämpfungsglieder bzw. Verstärker, welche vorzugsweise im Koppelpunkt der Koppelmatrix K integriert sind. Die einzelnen virtuellen Sektoren sind in **FIG. 2** mit 1, 2, .. bezeichnet.

**FIG. 2** zeigt eine Ausführungsform der Signalverarbeitung zur Sektorbildung am Beispiel eines Empfängers für vier Antennen und zwei Sektoren. Die Signal-Verarbeitungseinheit SV weist dabei Module in folgender Reihenfolge auf:

- eine an den Anschlusspunkt S des jeweiligen Antennenelements AE1, 2, 3, ..., N angeschlossene erste lineare Verstärker-Bandpassfilterkombination (FV1) zur Verstärkung und Bandbegrenzung des empfangenen Sekundärradarsignals,

- einen an die erste Verstärker-Bandpassfilterkombination FV1 angeschlossenen Mischer M zur Frequenzumsetzung in einen ZF-Bereich,

- einen an den Mischerausgang angeschlossenen zweiten linearen Verstärker FV2 zur Verstärkung des Signals im ZF-Bereich,

- einen an den zweiten linearen Verstärker FV2 angeschlossenen Analog-Digital-Umsetzer AD zur Abtastung und Quantisierung dessen Eingangssignals und

- die mit dem Analog-Digital-Umsetzer AD verbundene Koppelmatrix K, deren Koeffizienten $\alpha_{11}, \alpha_{12}, \dots, \alpha_{21}, \alpha_{22} \dots$ zur Sektorisierung des zu überwachenden Raumes mittels einer Steuerung oder Parametrierung einstellbar sind.

Vorzugsweise weist der zweite lineare Verstärker FV2 ein Bandpassfilter zur Bandbegrenzung des Signals im ZF-Bereich auf.

Bei einer in der Zeichnung nach **FIG. 2** nicht dargestellten Ausführungsform ist vorgesehen, dass die Signal-Verarbeitungseinheit SV mindestens Module in folgender Reihenfolge aufweist:

- eine an den Anschlusspunkt S des jeweiligen Antennenelements AE1, 2, 3, ..., N angeschlossene erste lineare Verstärker-Bandpassfilterkombination FV1 zur Verstärkung und Bandbegrenzung des empfangenen Sekundärradarsignals,
- einen an die erste Verstärker-Bandpassfilterkombination FV1 angeschlossenen Mischer M zur Frequenzumsetzung ins komplexe Basisband,
- einen an den Mischer M angeschlossenen Analog-Digital-Umsetzer AD zur Abtastung und Quantisierung dessen Eingangssignals und
- die mit dem Analog-Digital-Umsetzer AD verbundene Koppelmatrix K, deren Koeffizienten $\alpha_{11}, \alpha_{12}, \dots, \alpha_{21}, \alpha_{22} \dots$ zur Sektorisierung des zu überwachenden Raumes mittels einer Steuerung oder Parametrierung einstellbar sind.

**FIG. 2** zeigt eine Ausführungsform der Sektorbildung am Empfänger für vier Antennen und mehrere (in **FIG. 2:** 2) Sektoren. Das Signal der Antenne A wird hier zunächst in FV1 gefiltert und verstärkt, bevor es mit dem Mischer M auf eine Zwischenfrequenz gemischt wird. Nach weiterer Zwischenfrequenzfilterung und Verstärkung in FV2 erfolgt in AD die Analog-Digital-Wandlung der Signale. Um Frequenz- und Phasendifferenzen in der analogen Signalverarbeitung zu vermeiden, wird dabei zum Mischen aller Antennensignale ein zentraler Mischoszillator CK1 verwendet sowie alle ADCs von einem zentralen Abtastfrequenzgenerator CK2 versorgt. Zur Erzeugung des Signals für einen Sektor 1 werden die Signale $x_1$, $x_2$, $x_3$ und $x_4$ weiterhin mit Koeffizienten $\alpha_{11}$, $\alpha_{12}$, $\alpha_{13}$ und $\alpha_{14}$ gewichtet. Analoges gilt für die Erzeugung weiterer Sektoren m (m= 2,3,4,...) mit Koeffizienten $\alpha_{m1}$, $\alpha_{m2}$, $\alpha_{m3}$, $\alpha_{m4}$.

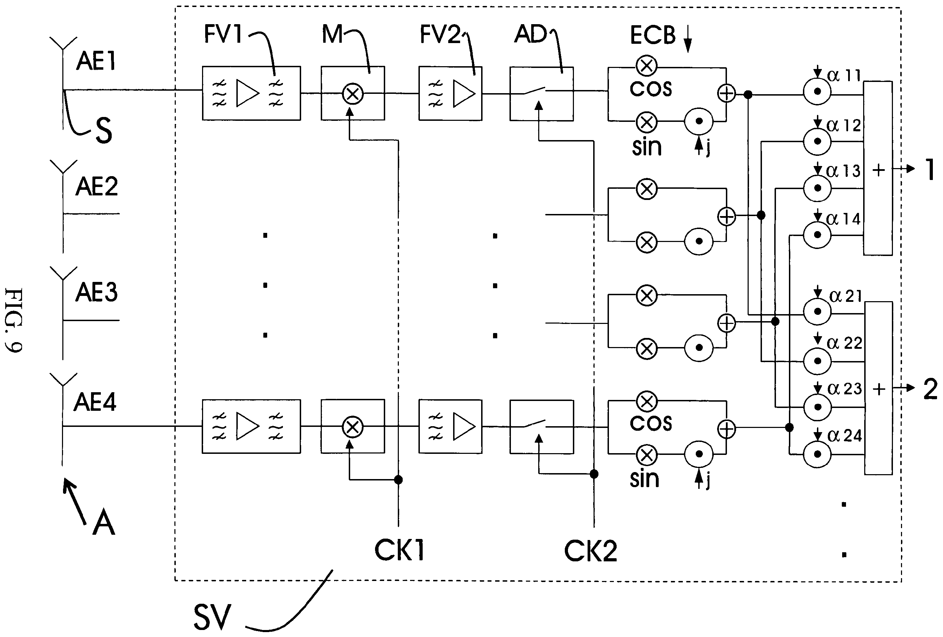

**FIG. 9** zeigt eine weitere Ausführungsform der Signalverarbeitung mit Verarbeitung von ECB-Signalen. Dabei erfolgt nach Analog-Digital-Wandlung der Signale in AD das (digitale) Mischen ins ECB und eine Tiefpassfilterung (Tiefpassfilter in **FIG. 9** nicht dargestellt). **FIG. 9** zeigt eine spezielle digitale Mischung aller Antennensignale, wobei gleiche Mischertabelle (für sin, cos) verwendet und im Rahmen der Erfindung auch andere Mischer für die Erzeugung der ECB Signale $x_1$, $x_2$, $x_3$ und $x_4$ benutzt werden können.

**FIG. 3** zeigt ein Beispiel für die Ausgestaltung der Empfangscharakteristik eines virtuellen Sektors, bei dem die Koeffizienten der Koppelmatrix derart gewählt sind, dass sich für die Signale aus Richtung des Störers D eine Auslöschung oder zumindest starke Dämpfung ergibt. Diese Unterdrückung von Signalen aus einer bestimmten Richtung wird auch als geeignete Platzierung einer Nullstelle in der Richtcharakteristik bezeichnet.

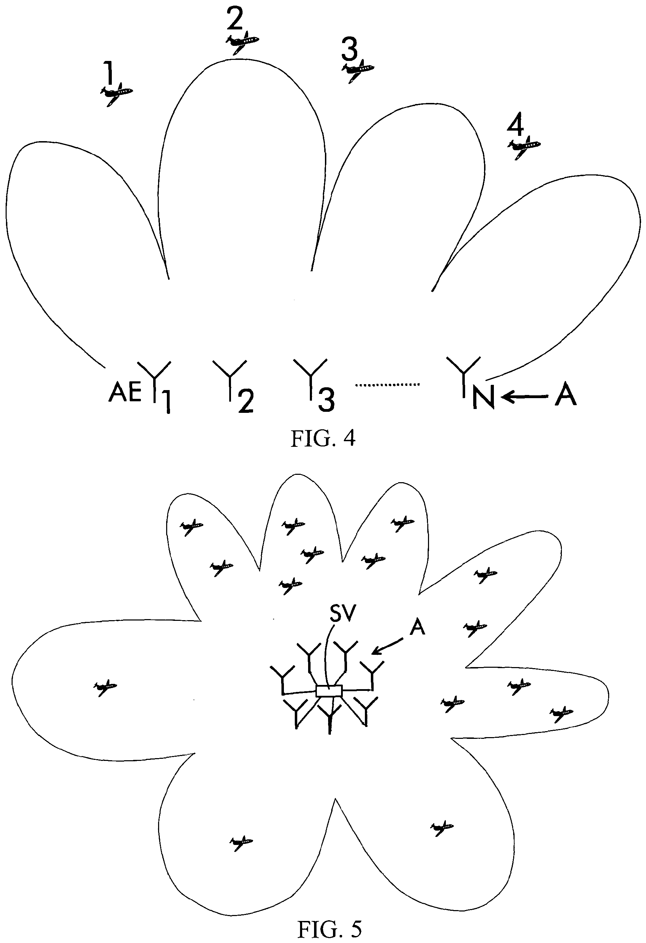

**FIG. 4** zeigt ein weiteres Beispiel für die Empfangscharakteristik eines virtuellen Sektors, bei dem durch andere Wahl der Koppelkoeffizienten die Ausblendung mehrerer Objekte 1, 3 und 4 bei Empfang des Objekts 2 erzielt wird. Dementsprechend sind hier im Vergleich zu **FIG. 3** mehrere Nullstellen in der Richtcharakteristik vorhanden.

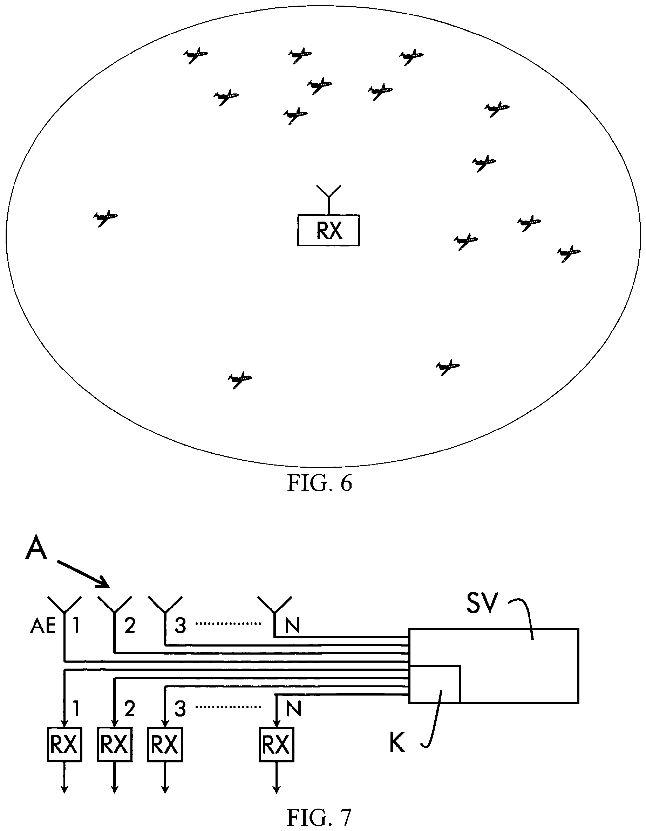

Die **FIG. 5** und **FIG. 6** verdeutlichen den durch die virtuelle Sektorisierung erzielten Vorteil einer geringeren Wahrscheinlichkeit von Überlagerungen der Signale verschiedener Sender. In beiden **FIG. 5** und **FIG. 6** sind in einem Raum um den Empfänger eine Anzahl an Sendern verteilt, wobei in beiden **FIG. 5** und **FIG. 6** die gleiche Verteilung angenommen wird.

**FIG. 6** zeigt nun die Empfangssituation beim Stand der Technik unter Verwendung einer Empfangsantenne mit Rundempfangs-Charakteristik. Durch diesen omnidirektionalen Empfang können sich potentiell die Signale sehr vieler Sender gegenseitig überlagern, da alle betrachteten Sender im Empfangsbereich des Empfängers liegen.

**FIG. 5** zeigt im Gegensatz dazu nun ein Beispiel für die Ausgestaltung einer Sektorenaufteilung (hier mit 8 Sektoren) mit verschiedenen Senderdichten in unterschiedlichen Raumrichtungen unter Verwendung einer zirkularen Antennenanordnung. Wie hierbei zu erkennen ist, befinden sich in den einzelnen Sektoren jetzt nur noch wenige Sender, wodurch vorteilhafterweise die Wahrscheinlichkeit von Überlagerungen nun entsprechend stark reduziert ist. Weiterhin ist in **FIG. 5** zu erkennen, dass die flexible Gestaltungsmöglichkeit der einzelnen virtuellen Sektoren dazu genutzt wird, die Größe der Sektoren an die im jeweiligen Raumbereich vorhandene Senderdichte anzupassen. Bei einer ungleichmäßigen Verteilung der Sender wird damit bei gleicher Sektoranzahl die Überlagerungswahrscheinlichkeit noch weiter reduziert. Bei der hier betrachteten Anwendung des Empfangs von Sekundärradarsignalen ist eine solche ungleichmäßige Verteilung sogar die Regel.

**FIG. 7** zeigt die nachträgliche Integration in ein bestehendes System mit Einzelkanalempfängern, wobei der jeweilige Signalpfad zwischen Antenne und Empfänger aufgetrennt und die Signal-Verarbeitungseinheit zwischengeschaltet wird, welche die Vorverarbeitung der zugeführten Antennensignale durch Anwendung der Koppelmatrix und damit die Aufteilung, in Sektoren realisiert und die resultierenden Signale den Einzelkanalempfängern wieder zur Verfügung stellt.

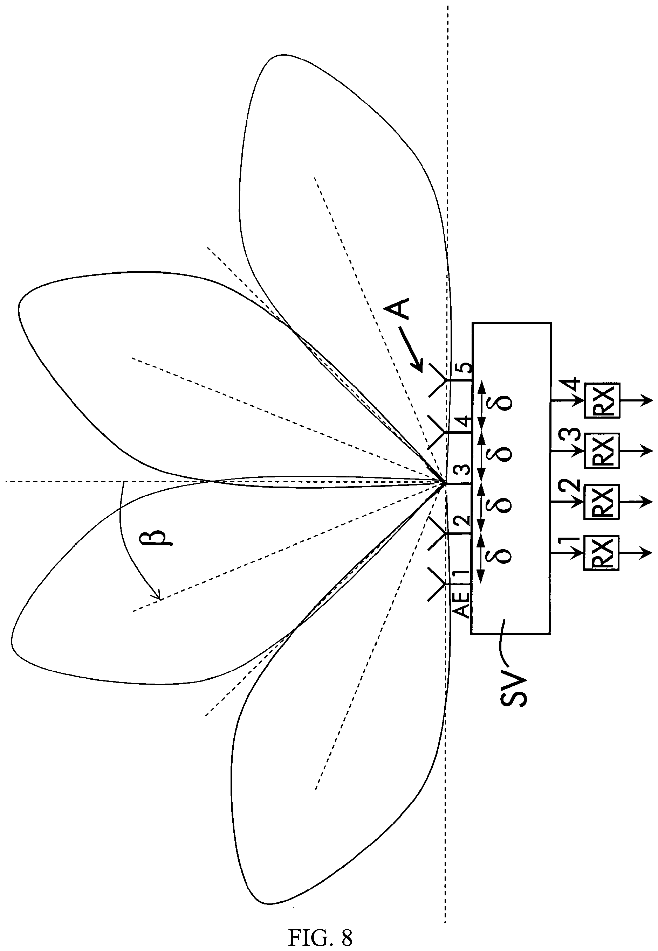

**FIG. 8** zeigt die Bildung der Koeffizienten am Beispiel eines gleichförmigen, linearen Antennenarrays (ULA: Uniform Linear Array) bei Betrachtung/Überwachung von nur einer Halbebene mittels 4 fester, gleichmäßiger Sektoren (Anmerkung: für die vereinfachte Darstellung auf nur eine Halbebene wird hier davon ausgegangen, dass die Antennen aufgrund ihrer mechanischen Konstruktion gegenüber der anderen Halbebene abgeschirmt sind).

Die Gleichung

$$ Y = K^T X , $$

beschreibt die Kopplung des zwischen den Antennensignalen und den daraus erzeugten Sektorsignalen für die einzelnen Empfänger. Dabei ist **X** die Matrix der einzelnen Antennensignale (z.B. der zugehörigen ECB-Signale), **Y** die Matrix der Ausgangssignale für die einzelnen Sektoren / Empfänger und

$$ K = \begin{bmatrix} k_1 & k_2 & k_3 & \dots & k_M \end{bmatrix} $$

die Koppelmatrix mit den einzelnen Koppelvektoren

$$ k_m = \begin{bmatrix} \alpha_{m1} & \alpha_{m2} & \dots & \alpha_{mN} \end{bmatrix}^T $$

zur Abbildung der N Antennensignale auf den Sektor m (m=1,2,...,M), bestehend aus den Koeffizienten $\alpha_{mn}$. Die Koeffizienten lassen sich beispielsweise aus der konstruktiven Überlagerung der einfallenden Wellenfronten berechnen.

Als Beispiel seien die Koeffizienten hier angegeben für die spezielle Anordnung der Antennen im Abstand der halben Wellenlänge, also $\delta=\lambda/2$. Dabei ergibt sich die Koppelmatrix zu

$$ K = \begin{pmatrix} 1 & 1 & 1 & 1 \\ e^{j\pi\sin(\beta_1)} & e^{j\pi\sin(\beta_2)} & e^{j\pi\sin(\beta_3)} & e^{j\pi\sin(\beta_4)} \\ e^{j2\pi\sin(\beta_1)} & e^{j2\pi\sin(\beta_2)} & e^{j2\pi\sin(\beta_3)} & e^{j2\pi\sin(\beta_4)} \\ e^{j3\pi\sin(\beta_1)} & e^{j3\pi\sin(\beta_2)} & e^{j3\pi\sin(\beta_3)} & e^{j3\pi\sin(\beta_4)} \\ e^{j4\pi\sin(\beta_1)} & e^{j4\pi\sin(\beta_2)} & e^{j4\pi\sin(\beta_3)} & e^{j4\pi\sin(\beta_4)} \end{pmatrix} . $$

wobei $\beta_i$ der Einfallswinkel des jeweiligen Beams ist.

Als Erweiterung dieses Beispiel zu einem dynamischen System könnten weitere Empfänger enthalten sein, deren Beams dynamisch den interessierenden Objekten nachgeführt werden. Ein erfindungsgemäßes System ist üblicherweise eingebunden in ein umfangreicheres Gesamtsystem (z.B. zur Luftraumüberwachung). Kennt man aufgrund anderer Mechanismen bzw. Teilsysteme in diesem Gesamtsystem (Multilateration, Richtungsschätzung (Winkelmessung), ADS-B (GPS-Koordinaten), (Primär-)Radar, etc.) bereits die ungefähren Positionen von Objekten im betrachteten Raum, kann diese Kenntnis durch die zentrale Signalverarbeitungseinheit angewandt werden, um die Beams nachzuführen und/oder die Form der Beams anzupassen (z.B. durch Einfügen von Nullstellen zum Ausblenden von (störenden) Objekten), indem die Koeffizienten des/der jeweiligen Beams dynamisch angepasst werden.

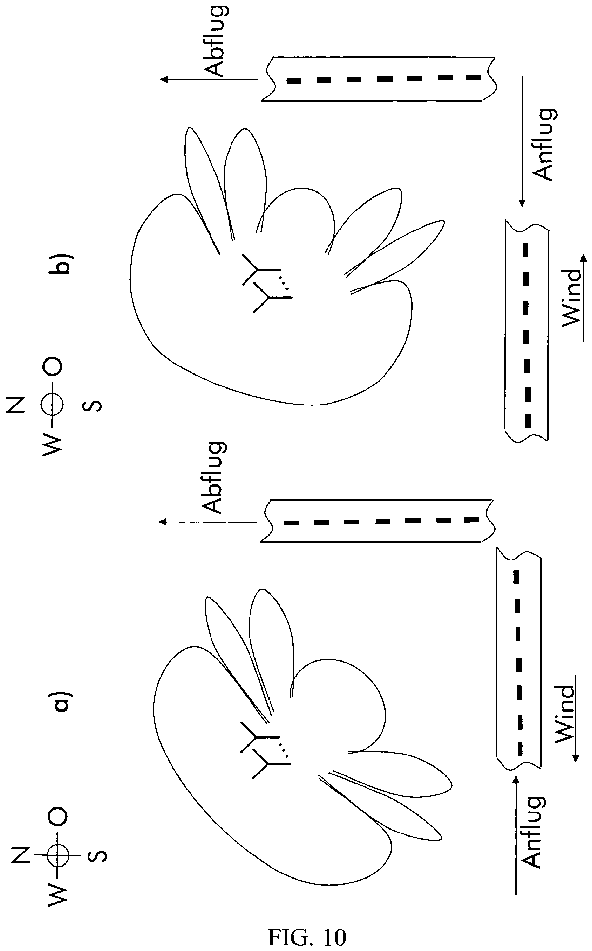

**FIG. 10** zeigt ein Beispiel für eine quasi-dynamische Anpassung der Sektoren für einen Flughafenbereich mit einer Start- und einer Landebahn. Die Anflugrichtung der Flugzeuge für den Landevorgang wird dabei der aktuellen Windrichtung angepasst, wobei die Flugzeuge im einen Fall von links bzw. Westen (Teilbild a) und im anderen Fall von rechts bzw. Osten (Teilbild b) kommend landen. Dementsprechend ändern sich auch die für die Überwachung relevanten Bereiche. Im Teilbild b ereignen sich die meisten Flugbewegungen vom Überwachungssystem aus gesehen in östlicher Richtung, so dass in dieser Richtung eine höhere Auflösung - also eine Aufteilung in eine höhere Anzahl von Sektoren - benötigt wird, während in westlicher Richtung eine geringe Anzahl Sektoren ausreicht. Im Teilbild a dagegen ereignen sich demgegenüber deutlich mehr Flugbewegungen auch in westlicher Richtung, weshalb eine Verschiebung der virtuellen Sektoren in diese Richtung hin erfolgt.

Da sich die Windrichtung nur relativ langsam ändert und daher die Anflugrichtung oft über einen längeren Zeitraum (typischerweise mehrere Stunden) unverändert bleibt, können im einfachsten Fall auch die virtuellen Sektoren für die Überwachung über diesen Zeitraum konstant gehalten werden und beispielsweise nur bei erneuter Änderung der Anflugrichtung eine Umschaltung der Sektorisierung von Fall a nach Fall b bzw. umgekehrt vorgenommen werden.

Die vorliegende Erfindung kann in vorteilhafter Weise auch bei der nicht vorveröffentlichten Deutschen Patentanmeldung 10 2008 010 882.0-55 der Anmelderin, welche eine Vorrichtung und ein Verfahren zur Richtungsschätzung von Sekundärradarsignalen betrifft, in Kombination eingesetzt werden.

Um ein funkbasiertes Ortungssystem derart auszugestalten, dass einerseits eine Richtungsschätzung und/oder andererseits eine Decodierung von Sekundärradarsignalen ermöglicht weiden, weist die Vorrichtung auf:

- mindestens ein aus M Antennenelementen bestehendes Array,
- einen an eine Steckverbindung des jeweiligen Antennenelements angeschlossenen rauscharmen, linearen Verstärker, welcher das empfangene Sekundärradarsignal im Pegel anhebt,
- ein mit dem rauscharmen Verstärker verbundenes erstes Bandpass-Filter, an dessen Filterausgang ein erster linearer Verstärker zur Verstärkung des bandbegrenzten Signals angeschlossen ist,
- ein an den ersten linearen Verstärker angeschlossener Mischer zur Frequenzumsetzung in einen ZF-Bereich.
- ein an den Mischerausgang angeschlossener zweiter linearer Verstärker zur Verstärkung des Signals im ZF-Bereich,
- ein an den zweiten linearen Verstärker zweites Bandpass-Filter zur Bandbegrenzung des Signals im ZF-Bereich,
- einen an das zweite Bandpass-Filter angeschlossenen ersten Analog-Digital-Umsetzer zur Abtastung und Quantisierung des Filterausgangssignals,
- einen mit den ersten Analog-Digital-Umsetzer verbundenen konfigurierbaren Signalprozessor, welcher zur Regelung der Mischerfrequenz mit einer PLL-VCO-Schaltung verbunden ist und die Daten für die Verarbeitung übernimmt und
- eine mit den konfigurierbaren Signalprozessoren verbundene zentrale Verarbeitungseinheit , welche die Daten von allen Antennenelementen aufsammelt und einerseits die Richtungsschätzung mittels eines subraumbasierten Verfahren und andererseits die Sektorisierung durch Anwendung einer Koppelmatrix sowie die Empfängeralgorithmen für die einzelnen Sektoren durchführt,

so dass unterschiedliche Verstärkungen, Phasendifferenzen und variierenden Rauschzahlen in den an die M Antennenelemente angeschlossenen analogen Eingangsstufen sowohl bei der Richtungsschätzung als auch bei der Detektion der empfangenen Funkdaten berücksichtigt werden, gelöst.

Das in der nicht vorveröffentlichten Deutschen Patentanmeldung 10 2008 010 882.0-55 der Anmelderin beschriebene Verfahren für ein Sekundärradarsystem mit mindestens einem aus M Antennenelementen bestehenden Array und an die M Antennenelemente angeschlossenen analogen Eingansstufen mit linearen Verstärkern, Bandpass-Filtern, Mischer, Analog-Digital-Umsetzern, konfigurierbarem Signalprozessoren und einer Verarbeitungseinheit, löst die Aufgabe der Richtungsschätzung und/oder Decodierung von Sekundärradarsignalen indem:

- einer der Signalprozessoren erste und zweite Taktsignale als Zeitnormal für Mischer und A/D-Wandler generiert,
- eine kohärente analoge und digitale Signalverarbeitung in der mit den Signalprozessoren verbundenen Verarbeitungseinheit durchgeführt wird, welche die Daten von allen Antennenelementen aufsammelt und die Richtungsschätzung mittels eines subraumbasierten Verfahren durchführt und
- unterschiedliche Verstärkungen, Phasendifferenzen und variierenden Rauschzahlen in den an die M Antennenelemente angeschlossenen analogen Eingansstufen sowohl bei der Richtungsschätzung nach Maßgabe einer Kreuzpeilung als auch bei der Detektion der empfangenen Funkdaten berücksichtigt werden.

Neu gegenüber dem Stand der Technik ist insbesondere dabei folgendes:

- Anwendung auf die Sekundärradartechnik
- Dynamische Anpassung der Beam-Formen (mittels Anpassung der Koeffizienten) im Betrieb (anstatt statischer Konfiguration).

Vorteile gegenüber dem Stand der Technik:

- Das System ermöglicht eine dynamische Einstellung auf Flugzeughäufungen in bestimmten Raumbereichen
- Störungen durch Flugzeuge oder andere Störsender können ausgeblendet werden (während Systeme nach dem Stand der Technik dort blind sind)
- Ausblendung von Mehrwegeausbreitung (Reflektionen) möglich, indem entsprechende Raumrichtungen ausgeblendet werden, und damit Verbesserung der Detektion
- prinzipiell ist auch konstruktive Nutzung von Mehrwegeausbreitung möglich; beispielsweise könnte zur Detektion der Signale eines Flugzeugs, dessen direkter Pfad schlecht trennbar von einem Störer überlagert ist, der direkte Pfad und damit auch der Störer ausgeblendet werden und stattdessen ein Reflektionspfad des Senders fokussiert und genutzt werden. Dies ist im Rahmen der Erfindung zu realisieren.

**Patentansprüche**

1. Vorrichtung zum Empfang von Sekundärradarsignalen ausgebildet zur sowohl dynamischen als auch quasi-dynamischen Sektorisierung des zu überwachenden Raumes, welche aufweist:

   • eine aus einer Vielzahl N von Antennenelementen (AE1, 2, 3, ..., N) bestehende Antennenanordnung (A) zum Empfang von gesendeten Sekundärradarsignalen,
   • eine am Anschlusspunkt (S) des jeweiligen Antennenelements (AE1, 2, 3, ..., N) angeschlossene Signal-Verarbeitungseinheit (SV) zur parallelen Verarbeitung aller N Antennensignale mit einer Koppelmatrix (K) mit einstellbaren Koeffizienten $\alpha_{11}, \alpha_{12}, ... , \alpha_{21}, \alpha_{22}$ ....) zur Sektorisierung eines zu überwachenden Raumes durch Überlagerung der Antennensignale mittels multiplikativ-additiver Verknüpfung der empfangenen Antennensignale,
   • eine Steuereinrichtung, welche hierzu die Koppelpunkte $\alpha_{11}, \alpha_{12}, ... , \alpha_{21}, \alpha_{22}$ ....) der Koppelmatrix (K) ansteuert, wobei ein Koeffizient $\alpha_{mN} = 1$ dem Zustand "durchgeschaltet" oder ein Koeffizient $\alpha_{mN} = 0$ dem Zustand "geöffnet" oder ein Koeffizient $\alpha_{mN} < 1$ dem Zustand "Dämpfung" oder ein Koeffizient $\alpha_{mN} > 1$ dem Zustand "Verstärkung" entspricht, und welche den Weg der Antennensignale durch die Koppelmatrix (K) und über mindestens einen Summierer/Additionsschaltung zu den Empfängern m (1, 2, ... , M; M>=2) schaltet,

   so dass jeder Empfänger m (m = 1, 2, ... , M) bei einer dynamischen Sektorisierung für jedes Empfangstelegramm eine andere mit bestimmten Koppelkoeffizienten ($\alpha_{m1}, \alpha_{m2}, ... , \alpha_{mN}$) gewichtete Überlagerung der Antennensignale erhält, wobei im quasi-dynamischen Fall die einstellbaren Koeffizienten $\alpha_{11}, \alpha_{12}, ... , \alpha_{21}, \alpha_{22}$ ....) über eine im Vergleich zum dynamischen Fall längere, mehrere Stunden dauernde Zeit fest sind.

2. Vorrichtung nach Anspruch 1, **dadurch gekennzeichnet, dass** die Signal-Verarbeitungseinheit (SV) Module in folgender Reihenfolge aufweist:

   • eine an den Anschlusspunkt (S) des jeweiligen Antennenelements (AE1, 2, 3, ..., N) angeschlossene erste lineare Verstärker-Bandpassfilterkombination (FV1) zur Verstärkung und Bandbegrenzung des empfangenen Sekundärradarsignals,
   • einen an die erste Verstärker-Bandpassfilterkombination (FV1) angeschlossenen Mischer (M) zur Frequenzumsetzung in einen ZF-Bereich,
   • einen an den Mischerausgang angeschlossenen zweiten linearen Verstärker (FV2) mit einem Bandpassfilter zur Verstärkung und zur Bandbegrenzung des Signals im ZF-Bereich,
   • einen an den zweiten linearen Verstärker (FV2) angeschlossenen Analog-Digital-Umsetzer (AD) zur Abtastung und Quantisierung dessen Eingangssignals und
   • die mit dem Analog-Digital-Umsetzer (AD) verbundene Koppelmatrix (K), deren Koeffizienten $\alpha_{11}, \alpha_{12}, ... , \alpha_{21}, \alpha_{22}$ ....) zur Sektorisierung des zu überwachenden Raumes mittels einer Steuerung oder Parametrierung einstellbar sind.

3. Vorrichtung nach Anspruch 1 oder 2, **dadurch gekennzeichnet, dass** die Summierer/Additionsschaltung(en) extern an den Ausgängen der Koppelmatrix (K) angeordnet oder in der Koppelmatrix (K) integriert sind.

4. Vorrichtung nach Anspruch 1, **dadurch gekennzeichnet, dass** die Signal-Verarbeitungseinheit (SV) mindestens Module in folgender Reihenfolge aufweist:

   • eine an den Anschlusspunkt (S) des jeweiligen Antennenelements (AE1, 2, 3, ..., N) angeschlossene erste lineare Verstärker-Bandpassfilterkombination (FV1) zur Verstärkung und Bandbegrenzung des empfangenen Sekundärradarsignals,
   • einen an die erste Verstärker-Bandpassfilterkombination (FV1) angeschlossenen Mischer (M) zur Frequenzumsetzung ins komplexe Basisband,
   • eine an den Mischer (M) angeschlossene Verstärker-Filterkombination (FV2) und einen daran angeschlossenen Analog-Digital-Umsetzer (AD) zur Abtastung und Quantisierung dessen Eingangssignals und
   • die mit dem Analog-Digital-Umsetzer (AD) verbundene Koppelmatrix (K), deren Koeffizienten $\alpha_{11}, \alpha_{12}, ... , \alpha_{21}, \alpha_{22}$ ....) zur Sektorisierung des zu überwachenden Raumes mittels einer Steuerung oder Parametrierung einstellbar sind.

5. Vorrichtung nach einem oder mehreren der Ansprüche 1 bis 4, **dadurch gekennzeichnet, dass** die Dämpfungsglieder bzw. Verstärker extern an den Ausgängen der Koppelmatrix (K) angeordnet oder im Koppelpunkt der Koppelmatrix (K) integriert sind.

6. Vorrichtung nach Anspruch 2, **dadurch gekennzeichnet, dass** zwischen Analog-Digital-Umsetzer (AD) und Koppelmatrix (K) ein digitaler Mischer (ECB) angeordnet ist, welcher eine digitale Mischung der zugeführten ZF-Signale ins äquivalente komplexe Basisband vornimmt.

7. Vorrichtung nach Anspruch 1, **dadurch gekennzeichnet, dass** die Antennenanordnung (A) als lineares oder zirkulares Array oder als matrixförmige Anordnung ausgebildet ist.

8. Vorrichtung nach Anspruch 1, **dadurch gekennzeichnet, dass** die Antennenanordnung (A) mit Antennenelementen (AE1, 2, 3, ..., N) in mehrdimensionaler Anordnung zueinander ausgebildet ist.

9. Vorrichtung nach Anspruch 8, **dadurch gekennzeichnet, dass** zur Aufteilung des Raums sowohl in horizontale als auch in vertikale Sektoren die Antennenanordnung (A) mit horizontal und vertikal angeordneten Antennenelementen (AE1, 2, 3, ..., N) ausgeführt ist.

10. Vorrichtung nach Anspruch 1, **dadurch gekennzeichnet, dass** zur nachträglichen Integration in bestehende Systeme mit Einzelkanalempfängern der jeweilige Signalpfad zwischen Antenne und Empfänger aufgetrennt und die Signal-Verarbeitungseinheit (SV) zwischengeschaltet ist, welche die Vorverarbeitung der zugeführten Antennensignale durch Anwendung der Koppelmatrix (K) und damit die Aufteilung in Sektoren realisiert und die resultierenden Signale den Einzelkanalempfängern wieder zur Verfügung stellt.

11. Vorrichtung nach einem der Ansprüche 1 bis 10, **dadurch gekennzeichnet, dass** durch Nutzung von Mehrwegeausbreitung die Steuerung anstelle auf den direkten Pfad auf dem ein Störer überlagert ist, auf einen Reflektionspfad des gesendetenSekundärradarsignals fokussiert, und somit den direkten Pfad und damit auch den Störer ausblendet.

12. Verfahren ausgebildet zur sowohl dynamischen als auch quasi-dynamischen Sektorisierung des zu überwachenden Raumes unter Verwendung einer Vorrichtung zum Empfang von Sekundärradarsignalen mit einer aus einer Vielzahl N von Antennenelementen (AE1, 2, 3, ..., N) bestehenden Antennenanordnung (A) zum Empfang der von Objekten gesendeten Sekundärradarsignalen, einer daran angeschlossenen Signal-Verarbeitungseinheit (SV) mit einer Koppelmatrix (K) und mehreren mit der Koppelmatrix (K) verbundenen Empfängern m (1, 2, ... , M; M>=2), bei dem:

   • die Ermittlung von Koeffizienten $\alpha_{11}$, $\alpha_{12}$, ... , $\alpha_{21}$, $\alpha_{22}$ ....) der Koppelmatrix (K) quasi dynamisch durch Parametrierung oder dynamisch im Betrieb und nach Maßgabe des Nutzsignals des jeweils interessierenden Objekts eines Sektors und/oder unter Berücksichtigung eventuell vorhandener Störsignale erfolgt,
   • die Koppelmatrix (K) den Empfängern m (m=1, 2, ... , M) jeweils eine mit bestimmten Koppelkoeffizienten ($\alpha_{m1}$, $\alpha_{m2}$, ... , $\alpha_{mN}$) gewichtete Überlagerung der Signale mittels multiplikativ-additiver Verknüpfung der empfangenen Antennensignale zur Verfügung stellt, wobei die Empfänger m (m=1, 2, ... , M) bei einer dynamischen Sektorisierung für jedes Empfangstelegramm eine andere mit bestimmten Koppelkoeffizienten ($\alpha_{m1}$, $\alpha_{m2}$, ... , $\alpha_{mN}$) gewichtete Überlagerung der Antennensignale erhalten und wobei im quasi-dynamischen Fall die einstellbaren Koeffizienten $\alpha_{11}$, $\alpha_{12}$, ... , $\alpha_{21}$, $\alpha_{22}$ ....) über eine im Vergleich zum dynamischen Fall längere, mehrere Stunden dauernde Zeit fest sind und
   • jeder Empfänger m (m=1, 2, ... , M) dabei eine andere Kombination von Koppelkoeffizienten ($\alpha_{m11}$, $\alpha_{m12}$, ... , $\alpha_{mN2}$) erhält und die Koeffizienten $\alpha_{11}$, $\alpha_{12}$, ... , $\alpha_{21}$, $\alpha_{22}$ ....) dabei derart gewählt werden, dass für jeden Empfänger (1, 2, ... , M) ein bestimmter Sektor des zu überwachenden Raums fokussiert wird,
   • ein Sektor entweder ein einzelner zusammenhängender Raumbereich oder eine Kombination mehrerer Raumbereiche ist und
   • die dynamische Anpassung der Beam-Formen durch Anpassung der Koeffizienten $\alpha_{11}$, $\alpha_{12}$, ... , $\alpha_{21}$, $\alpha_{22}$ ....) erfolgt.

13. Verfahren nach Anspruch 12, **dadurch gekennzeichnet, dass** bei der dynamischen Anpassung der Beam-Formen eine Optimierung durch Anpassung der Koeffizienten $\alpha_{11}$, $\alpha_{12}$, ... , $\alpha_{21}$, $\alpha_{22}$ ....) eines Beam derart erfolgt, dass das Maximum des Beam möglichst über dem interessierenden Objekt für den jeweiligen Empfänger liegt, oder dass die Nullstellen des Beam über auszublendende Objekte gelegt werden oder dass einerseits feste Sektoren, andererseits Sektoren, die dynamisch gemäß den aktuellen Anforderungen nachgeführt werden, gebildet werden.

14. Verfahren nach Anspruch 12, **dadurch gekennzeichnet, dass** die Kombination der den Antennenelementen (AE1, 2, 3, ..., N) zugeordneten Signale in der Signal-Verarbeitungseinheit (SV) sowohl auf Basis von ECB-Signalen als auch von HF- oder ZF-Signalen erfolgt.

15. Verfahren nach Anspruch 12 mit Antennenelementen (AE1, 2, 3, ..., N) in mehrdimensionaler Anordnung zueinander, **dadurch gekennzeichnet, dass** eine Aufteilung des Raums in horizontale Sektoren und/oder eine vertikale Aufteilung des Raums nach Maßgabe verschiedener Elevationswinkel erfolgt.

**Claims**

1. A device for receiving secondary radar signals designed for both quasi-dynamic or dynamic sectoring of the space to be monitored, comprising:

   • at least one antenna arrangement (A) comprising a plurality N of antenna elements (AE1, 2, 3, ..., N) for receiving transmitted secondary radar signals,
   • a signal processing unit (SV) connected to a connection point (S) of the respective antenna element (AE1, 2, 3, ..., N) for a parallel processing of all N antenna signals by a coupling matrix (K) with adjustable coefficients ($a_{11}$, $a_{12}$, ..., $a_{21}$, $a_{22}$ ....) for the sectorization of a space to be monitored by superposition of the antenna signals by means of multiplicative-additive linking of the received antenna signals,
   • a control device which controls the crosspoints $\alpha_{11}$, $\alpha_{12}$, ... , $\alpha_{21}$, $\alpha_{22}$ ....) of the coupling matrix (K), wherein a coefficient $\alpha_{mN} = 1$ corresponds to "connected through" or a coefficient $\alpha_{mN} = 0$ corresponds to "open" or a coefficient $\alpha_{mN} < 1$ corresponds to "attenuation" or a coefficient $\alpha_{mN} > 1$ corresponds to "amplification" and which switches the path of the antenna signals through the coupling matrix (K) and via at least one summer / addition circuit to the receivers m (1, 2, ... , M; M>=2),

   such that with regard to dynamic sectoring, each receiver m (m = 1, 2,..., M) obtains a different weighting for each receive telegram weighted by certain coupling coefficients ($\alpha_{m1}$, $\alpha_{m2}$, ... , $\alpha_{mN}$), wherein in the quasi-dynamic case, the adjustable coefficients ($\alpha_{11}$, $\alpha_{12}$, ... , $\alpha_{21}$, $\alpha_{22}$ ....) are fixed over a longer time lasting several hours in comparison to the dynamic case.

2. Device according to Claim 1, **characterized in that** said signal processing unit (SV) has modules in the following sequence:

   • a first linear amplifier bandpass filter combination (FV1) connected to the connection point (S) of the respective antenna element (AE1, 2, 3, ..., N) for amplification and band limitation of the received secondary radar signal,
   • a mixer (M) connected to the first amplifier bandpass filter combination (FV1) for frequency conversion to an IF-range,
   • a second linear amplifier (FV2) having a bandpass filter connected to the mixer output for amplifying and band limitation of the signal in the IF-range,
   • an analog-to-digital converter (AD) connected to the second linear amplifier (FV2) for sampling and quantizing its input signal, and
   • the coupling matrix (K) connected to the analog-to-digital converter (AD), the coefficients ($\alpha_{11}$, $\alpha_{12}$, ... , $\alpha_{21}$, $\alpha_{22}$ ....) of the coupling matrix (K) are adjustable for the sectorization of the space to be monitored by means of a control or a parameterization.

3. Device according to claim 1 or 2, **characterized in that** the summer / addition circuit (s) are arranged externally at the outputs of the coupling matrix (K) or integrated in the coupling matrix (K).

4. Device according to Claim 1, **characterized in that** the signal processing unit (SV) has at least modules in the following order:

   • a first linear amplifier bandpass filter combination (FV1) connected to the connection point (S) of the respective antenna element (AE1, 2, 3, ..., N) for amplification and band limitation of the received secondary radar signal,
   • a mixer (M) connected to the first amplifier bandpass filter combination (FV1) for frequency conversion to the complex baseband,

• an amplifier bandpass filter combination (FV2) connected to the mixer (M) and connected to an analog-to-digital converter (AD) for sampling and quantizing its input signal, and

• the coupling matrix (K) connected to the analog-to-digital converter (AD), the coefficients $\alpha_{11}$, $\alpha_{12}$, ... , $\alpha_{21}$, $\alpha_{22}$ ....) of the coupling matrix (K) are adjustable for the sectorization of the space to be monitored by means of a control or a parameterization.

5. Device according to one or more of claim 4, **characterized in that** the attenuators or amplifiers are arranged externally at the outputs of the coupling matrix (K) or integrated in the crosspoints of the coupling matrix (K).

6. Device according to claim 2, **characterized in that** between the analog-digital converter (AD) and coupling matrix (K), a digital mixer (ECB) is arranged, which performs a digital mixing of the supplied IF-signals into the equivalent complex baseband.

7. Device according to claim 1, **characterized in that** the antenna arrangement (A) is formed as a linear or circular array or as a matrix-shaped arrangement.

8. Device according to claim 1, **characterized in that** the antenna arrangement (A) with antenna elements (AE1, 2, 3, ..., N) is formed in a multi-dimensional arrangement to each other.

9. Device according to claim 8, **characterized in that** for the sectoring of the space in both horizontal and in vertical sectors, the antenna arrangement (A) is formed with horizontally and vertically arranged antenna elements (AE1, 2, 3, ..., N).

10. Device according claim 1, **characterized in that** for subsequent integration into existing systems with single-channel receivers, the respective signal path between antenna and receiver is separated and the signal processing unit (SV) is interposed, which realizes the preprocessing of the supplied antenna signals by using the coupling matrix (K) and so that the division into sectors is realized, and provides the resulting signals again to the single channel receivers.

11. Device according to one of claims 1 to 10, **characterized in that** by a use of multipath propagation the control focuses instead of the direct path, where an interferer is superimposed, to a reflection path of the transmitted secondary radar signals and such cutting out the direct path and also the interferer.

12. A method designed for both quasi-dynamic or dynamic sectorization of the space to be monitored using a device for receiving secondary radar signals with an antenna arrangement (A) comprising a plurality N of antenna elements (AE1, 2, 3, ..., N) for receiving the secondary radar signals sent from objects, a signal processing unit (SV) connected thereto with a coupling matrix (K) and several receiver m (1, 2, ... , M; M>=2) connected to the coupling matrix (K), in which:

   • the determination of coefficients $\alpha_{11}$, $\alpha_{12}$, ... , $\alpha_{21}$, $\alpha_{22}$ ....) of the coupling matrix (K) occurs quasi dynamically by parameterization or dynamically during operation and in accordance with the useful signal of the respective object of interest of a sector and / or taking into account any present interfering signals,

   • the coupling matrix (K) provides to the receiver m (m = 1, 2, ..., M) each one with a weighted superposition of signals weighted by certain coupling coefficients ($\alpha_{m1}$, $\alpha_{m2}$, ... , $\alpha_{mN}$) by means of multiplicative-additive linking of the received antenna signals, wherein in a dynamic sectorization the receivers (m=1, 2, ... , M) obtains for each receive message another with certain coupling coefficients ($\alpha_{m1}$, $\alpha_{m2}$, ... , $\alpha_{mN}$) weighted superposition of the antenna signals and wherein in the quasi dynamic case the adjustable coefficients $\alpha_{11}$, $\alpha_{12}$, ... , $\alpha_{21}$, $\alpha_{22}$ ....) are fixed over a longer time lasting several hours in comparison to the dynamic case and

   • each receiver m (m = 1, 2, ..., M) obtains a different combination of coupling coefficients ($\alpha_{m11}$, $\alpha_{m12}$, ... , $\alpha_{mN2}$) and that the coefficients ($\alpha_{11}$, $\alpha_{12}$, ... , $\alpha_{21}$, $\alpha_{22}$ ....) are chosen such that for each receiver (1, 2, ..., M) a certain sector of the monitored space is focused,

   • a sector is either a single contiguous space area or a combination of several space areas and

   • the dynamic adaptation of the beam shapes takes place by adjusting the coefficients ($\alpha_{11}$, $\alpha_{12}$, ... , $\alpha_{21}$, $\alpha_{22}$ ....).

13. Method according to Claim 12, **characterized in that** in the case of the dynamic adaptation of the beam an optimization of a beam by the coefficients ($\alpha_{11}$, $\alpha_{12}$, ... , $\alpha_{21}$, $\alpha_{22}$ ....) is such, that the maximum of the beam is placed as possible on the object of interest for the respective receiver, or such, that the zeros of the beam are placed on blinding objects, or such, on the one hand fixed sectors and on the other hand sectors are formed which are dynamically tracked according to the current requirements.

**14.** A method according to claim 12, **characterized in that** the combination of the signals assigned to the antenna elements (AE1, 2, 3, ..., N) is done by the signal processing unit (SV) based on both ECB signals and on HF- or IF-signals.

**15.** A method according to claim 12 with antenna elements (AE1, 2, 3, ..., N) arranged in a multi-dimensional arrangement to each other, **characterized in that** that a division of the space into horizontal sectors and / or a vertical division of the space takes place in accordance with different elevation angle.

## Revendications

**1.** Un dispositif de réception de signaux radar secondaires développés pour la sectorisation de l'espace à surveiller aussi bien que en dynamique ou en quasi-dynamique, comprenant:

• au moins un agencement d'antenne (A) comprenant une pluralité N d'éléments d'antenne (AE1, 2, 3, ..., N) pour recevoir des signaux radar secondaires transmis,
• une unité de traitement de signal (SV) connectée à un point de connexion (S) de l'élément d'antenne respectif (AE1, 2, 3, ..., N) ayant une matrice de couplage (K) avec des coefficients ajustables ($a_{11}$, $a_{12}$, ..., $a_{21}$, $a_{22}$ ....) pour un traitement parallèle de tous les N signal d'antenne pour la sectorisation d'un espace à surveiller par superposition des signaux d'antenne au moyen d'une liaison multiplicative-additive des signaux d'antenne reçus,
• un dispositif de commande celui commandé les points de croisement ($\alpha_{11}$, $\alpha_{12}$, ... , $\alpha_{21}$, $\alpha_{22}$ ....) de la matrice de couplage (K), à condition qu'un coefficient $\alpha_{mN} = 1$ correspond à "connecté par", ou un coefficient à = 0 correspond à "ouvert" ou un coefficient $\alpha_{mN}<1$ correspond à "atténuation" ou un coefficient $\alpha_{mN}>1$ correspond à "amplification" et celui passent un chemin les signaux d'antenne par la matrice de couplage (K) et par au moins un circuit sommateur / additionneur aux commutateurs / récepteurs (1, 2, ... , M; M>=2),

de sorte que pour la sectorisation dynamique, chaque récepteur m (m = 1, 2, ..., M) pour chaque télégramme récepteur, obtenus une pondération différente pour chaque télégramme de réception pondéré par certains coefficients de couplage ($\alpha_{m1}$, $\alpha_{m2}$, ... , $\alpha_{mN}$) et en ce que dans le cas quasi-dynamique, les coefficients ajustables ($\alpha_{11}$, $\alpha_{12}$, ... , $\alpha_{21}$, $\alpha_{22}$ ....) sont fixes sur une période plus longue pendant plusieurs heures en comparaison du cas dynamique.

**2.** Dispositif selon la revendication 1, **caractérisé en ce que** l'unité de traitement de signal (SV) présente les modules dans l'ordre suivant:

• une première combinaison de filtres passe-bande d'amplificateurs linéaires (FV1) connectée au point de connexion (S) de l'élément d'antenne respectif (AE1, 2, 3, ..., N) pour l'amplification et la limitation de bande du signal radar secondaire reçu,
• un mélangeur (M) connecté à la première combinaison de filtres passe-bande amplificateur (FV1) pour la conversion de fréquence en une plage IF,
• un deuxième amplificateur linéaire (FV2) avec un filtre passe-bande connecté à la sortie du mélangeur pour amplification et pour la limitation de bande du signal dans la plage IF,
• un convertisseur analogique-numérique (AD) connecté au deuxième amplificateur linéaire (FV2) pour échantillonner et quantifier son signal d'entrée, et
• la matrice de couplage (K) connectée au convertisseur analogique-numérique (AD) dont les coefficients ($\alpha_{11}$, $\alpha_{12}$, ... , $\alpha_{21}$, $\alpha_{22}$ ....) pour la sectorisation de l'espace à surveiller sont réglables au moyen d'une commande ou d'un paramétrage.

**3.** Dispositif selon la revendication 2, **caractérisé en ce que** le ou les circuits d'addition / d'addition peuvent être disposés extérieurement aux sorties de la matrice de couplage (K) ou intégrés dans la matrice de couplage (K).

**4.** Dispositif selon la revendication 1, **caractérisé en ce que** l'unité de traitement de signal (SV) comporte au moins des modules dans l'ordre suivant:

• une première combinaison de filtres passe-bande d'amplificateurs (FV1) connectée au point de connexion (S) de l'élément d'antenne respectif (AE1, 2, 3, ..., N) pour l'amplification et la limitation de bande du signal radar secondaire reçu,

• un mélangeur (M) connecté à la première combinaison de filtres passe-bande amplificateur (FV1) pour la conversion de fréquence dans la bande de base complexe,

• un convertisseur analogique-numérique(AD) connecté à une combinaison d'amplificateur-filtre (FV2) et à un convertisseur analogique-numérique (AD) pour échantillonner et quantifier son signal d'entrée et

• la matrice de couplage (K) connectée au convertisseur analogique-numérique (AD), dont les coefficients ($\alpha_{11}$, $\alpha_{12}$, ... , $\alpha_{21}$, $\alpha_{22}$ ....) pour la sectorisation de l'espace à surveiller sont réglables au moyen d'une commande ou d'un paramétrage.

5. Dispositif selon la revendication 4, **caractérisé en ce que** les atténuateurs ou les amplificateurs sont extérieurement aux sorties de la matrice de couplage (K) ou intégrés dans le point de croisement de la matrice de couplage (K).

6. Dispositif selon la revendication 2, **caractérisé en ce qu'**un mélangeur numérique (ECB) est agencé entre le convertisseur analogique-numérique (AD) et la matrice de couplage (K) pour effectuer un mélange numérique des signaux IF fournis dans la bande de base complexe équivalente.

7. Dispositif selon la revendication 1, **caractérisé en ce que** l'agencement d'antenne (A) est formé sous la forme d'un réseau linéaire ou circulaire ou d'un agencement en forme de matrice.

8. Dispositif selon la revendication 1, **caractérisé en ce que** l'agencement d'antenne (A) avec des éléments d'antenne (AE1, 2, 3, ..., N) est formé en un agencement multidimensionnel l'un par rapport à l'autre.

9. Dispositif selon la revendication 8, **caractérisé en ce que** pour la division de l'espace en secteurs horizontaux et verticaux, l'agencement d'antenne (A) est exécuté avec des éléments d'antenne disposés horizontalement et verticalement (AE1, 2, 3, ..., N).

10. Dispositif selon la revendication 1, **caractérisé en ce que** pour l'intégration ultérieure dans des systèmes existants avec des récepteurs monocanaux, le chemin de signal respectif entre l'antenne et le récepteur séparé et l'unité de traitement de signal (SV) est interposé, ce qui permet de prétraiter les signaux d'antenne fournis en utilisant la matrice de couplage (K) et de sorte que la division en secteurs se réalise et fournit à nouveau les signaux résultants aux récepteurs monocanaux.

11. Dispositif selon l'une des revendications 1 à 10, **caractérisé en ce que** par utilisé la propagation par trajets multiples, la commande est focalisée à la place du chemin direct, celui un brouillage est superposé, vers un chemin de réflexion de signal radar secondaires transmis, et donc éliminée le chemin direct et le brouillage.

12. Un procède développés pour la sectorisation de l'espace à surveiller aussi bien que en dynamique ou en quasi-dynamique utilisant un dispositif de réception de signaux radar secondaires avec un agencement d'antenne (A) comprenant des N éléments d'antenne (AE1, 2, 3, ..., N) permettant de recevoir les signaux de radar secondaire envoyés par des objets, une unité de traitement de signal (SV) connectée à celle-ci avec une matrice de couplage (K) et plusieurs récepteur m (1, 2, ... , M; M>=2) connectée à la matrice de couplage (K), dans laquelle :

• la détermination de coefficients ($\alpha_{11}$, $\alpha_{12}$, ... , $\alpha_{21}$, $\alpha_{22}$ ....) de la matrice de couplage (K) se produit de manière quasi-dynamique par paramétrage ou de manière dynamique en cours de fonctionnement et en fonction du signal utile de l'objet d'intérêt correspondant d'un secteur et / ou en tenant compte des éventuels signaux d'interférence présents,

• la matrice de couplage (K) pondérée les récepteurs m (1, 2, ... , M; M>=2) chacun avec certains coefficients de couplage ($\alpha_{m1}$, $\alpha_{m2}$, ... , $\alpha_{mN}$) superposition de signaux par l'intermédiaire d'une liaison multiplicative-additive des signaux d'antenne reçus disponibles, les récepteurs m (1, 2, ... , M) peut dans une sectorisation dynamique reçue pour chaque message un autre avec certains coefficients de couplage ($\alpha_{m1}$, $\alpha_{m2}$, ... , $\alpha_{mN}$) une superposition pondérée des signaux d'antenne et en ce que dans le cas quasi-dynamique, les coefficients ajustables ($\alpha_{11}$, $\alpha_{12}$, ... , $\alpha_{21}$, $\alpha_{22}$ ....) sont fixes sur une période plus longue pendant plusieurs heures en comparaison du cas dynamique,

• chaque récepteur m (m = 1, 2, ..., M) présente une combinaison différente de coefficients de couplage ($\alpha_{m11}$, $\alpha_{m12}$, ... , $\alpha_{mN2}$) et que les coefficients ($\alpha_{11}$, $\alpha_{12}$, ... , $\alpha_{21}$, $\alpha_{22}$ ....) sont choisis de telle sorte que pour chaque récepteur m (1, 2, ..., M) un certain secteur de l'espace surveillé est focalisée,

• le secteur est soit une seule zone d'espace contigu ou soit une combinaison de plusieurs zones d'espace et

• l'adaptation dynamique des formes de faisceaux en ajustant les coefficients ($\alpha_{11}$, $\alpha_{12}$, ..., $\alpha_{21}$, $\alpha_{22}$ ....) a lieu.

**13.** Procédé selon la revendication 12, **caractérisé en ce que** pendant l'adaptation dynamique des formes une optimisation est fait par les coefficients ($\alpha_{11}$, $\alpha_{12}$, ... , $\alpha_{21}$, $\alpha_{22}$ ....) d'un faisceau est telle que le maximum du faisceau est placés possible sur l'objet d'intérêt pour le récepteur respectif ou **en ce que** les zéros du faisceau sont placés sur des objets éliminé ou **en ce que** d'une part, des secteurs fixes, d'autre part, des secteurs suivis dynamiquement en fonction des besoins actuels sont formés.

**14.** Procédé selon la revendication 12, **caractérisé en ce que** la combinaison des signaux affectés aux éléments d'antenne (AE1, 2, 3, ..., N) dans l'unité de traitement de signal (SV) peuvent être faits basée à la fois sur les signaux ECB et sur les signaux HF ou IF.

**15.** Procédé selon la revendication 12 avec des éléments d'antenne (AE1, 2, 3, ..., N) les uns aux autres dans un agencement multidimensionnel, **caractérisé en ce qu'** une division de l'espace en secteurs horizontaux et / ou une division verticale de l'espace a lieu selon différents angles d'élévation.

FIG. 1

FIG. 3

FIG. 2

FIG. 4

FIG. 5

FIG. 6

FIG. 7

FIG. 8

FIG. 9

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1953565 A1
- US 20040234016 A1
- US 20060055586 A1
- WO 2005010553 A1
- DE 102008010882055